# EUROPEAN PATENT APPLICATION

(11) **EP 3 590 350 A1**
(43) Date of publication of application: **08.01.2020**
(21) Application number: 19178283.8
(22) Date of filing: 16.09.2013
(51) Int. Cl.: A23F 5/02, A23N 12/08, A23F 5/40, A47J 31/44, A47J 31/42, A47J 31/36, A23F 5/26

(54) **SYSTEMS AND METHODS FOR COFFEE PREPARATION**

(30) Priority: 15.09.2012 US 201261743946 P; 18.02.2013 US 201361766066 P
(62) Divisional of application: 13837304.8
(71) Applicant: Boggavarapu, Deepak, San Carlos, CA 94070 (US)
(72) Inventor: Boggavarapu, Deepak, San Carlos, CA 94070 (US)
(74) Representative: Greaves Brewster LLP

(57) **Abstract**

Example embodiments of systems and methods for brewing coffee can include providing an integrated beverage system that can include a grinding system (306), a roasting system (312), and a brewing system (314). The integrated beverage system can be used with a container that can contain un-roasted coffee beans or coffee grounds, where the integrated beverage system can be configured to accept the container and can roast, grind, and brew coffee.

## Description

### Reference to Related Applications

The present application claims the priority benefit of U.S. provisional patent application Serial No. 61/743,946, filed September 15, 2012, and U.S. provisional patent application Serial No. 61/766,066, filed February 18, 2013, and hereby incorporates the same applications herein by reference in their entirety.

### Technical Field

Embodiments of the technology relate, in general, to coffee roasting, grinding, or brewing technology, and in particular to integrated roasting, grinding, or brewing coffee systems operable by a consumer.

### Background

Coffee has traditionally been made using a three step process that generally includes the roasting of coffee beans, grinding of roasted beans, and brewing of the ground beans in hot water to extract the flavor into a beverage. These three steps are traditionally done at different times and locations. Roasting is typically done in large industrial machines in large batches of tens of pounds to thousands of pounds at a time. Roasted beans or ground roasted beans are generally shipped to local retailers, which can take weeks to months before the package arrives for the consumer to brew. The consumer can be the retail home consumer or businesses, such as coffee shops, that brew and sell coffee. Roasted beans decay in freshness and taste from the moment the roast is completed as chemical compounds formed in the bean during the roasting process deteriorate. The decay of roasted beans may lead to the coffee having a less desirable taste. Coffee produced by such methods may be stale due to the time delay from roasting to brewing. The preparation of coffee generally involves the steps of roasting, grinding, and brewing. In current systems, roasting is generally performed at a separate location and performed days, weeks, or months prior to grinding and brewing.

The taste of coffee is generally determined by the type of coffee beans used and by numerous process parameters in each step of making the coffee beverage. A key set of chemical reactions that influence coffee taste occur during the roasting process. The roasting process is typically done in an industrial batch scale, and the end consumer has no control over the roast process or the taste of the coffee beverage as determined by the bean roast. Additionally, the degree of roasting for each bean type can transform the taste of the final coffee beverage to an individual consumer's liking, yet this degree of control by the consumer does not exist in the coffee industry today.

### Summary

An example embodiment of a method for brewing coffee can include providing an integrated beverage system that can include a roasting system and a brewing system and providing a container that can contain a plurality of coffee grounds, where the plurality of coffee grounds can be unroasted. The method can include inserting the container into the integrated beverage system, engaging the plurality of coffee grounds with the roasting system of the integrated beverage system, roasting the plurality of coffee grounds, engaging the plurality of coffee grounds with the brewing system of the integrated beverage system, and brewing the plurality of coffee grounds with the integrated beverage system.

An example embodiment of a method for brewing coffee can include providing an integrated beverage system that can include a roasting system, a grinding system, and a brewing system and providing a container that can contain a plurality of coffee beans, where the plurality of coffee beans can be unroasted. The method can include inserting the container into the integrated beverage system, engaging the plurality of coffee beans with the roasting system of the integrated beverage system, roasting the plurality of coffee beans, engaging the plurality of coffee beans with the grinding system of the integrated beverage system, grinding the plurality of coffee beans such that a plurality of coffee grounds can be formed, engaging the plurality of coffee grounds with the brewing system, and brewing the plurality of coffee grounds with the integrated beverage system.

An example embodiment of a method for brewing coffee can include providing an integrated beverage system that can include a grinding system, a roasting system, and a brewing system and providing a container that can contain a plurality of coffee beans, where the plurality of coffee beans can be unroasted. The method can include inserting the container into the integrated beverage system, engaging the plurality of coffee beans with the grinding system of the integrated beverage system, grinding the plurality of coffee beans such that a plurality of coffee grounds can be formed, engaging the plurality of coffee grounds with the roasting system of the integrated beverage system, roasting the plurality of coffee grounds, engaging the plurality of coffee grounds with the brewing system, and brewing the plurality of coffee grounds with the integrated beverage system.

In an example embodiment, an integrated coffee system can include a roasting chamber that can be configured to receive a user selectable quantity of coffee beans or grounds in an unroasted state. A control interface can be operatively coupled to the roasting chamber and can include one or a plurality of user selectable roasting parameters. The integrated coffee system can include a grinding chamber into which the coffee beans in a roasted state can be received. The control interface can be operatively coupled to the grinding chamber and can include one or a plurality of user selectable grinding parameters. The integrated coffee system can include a brewing chamber into which the user selectable quantity of coffee beans, in a ground state, can be received. The control interface can be operatively coupled to the brewing chamber and can include one or a plurality of user selectable brewing parameters.

An integrated coffee brewing method can comprise the steps of entering at a control interface each of at least one of a plurality of user selected roasting parameters, at least one of a plurality of user selected grinding parameters and at least one of a plurality of user selected brewing parameters. The integrated coffee brewing method can include the steps of roasting a user selectable quantity of coffee beans in accordance with the entered one of the roasting parameters, grinding the roasted coffee beans in accordance with the entered one of the grinding parameters, and brewing the ground coffee beans in accordance with the entered one of the brewing parameters.

### Brief Description of the Drawings

The present disclosure will be more readily understood from a detailed description of some example embodiments taken in conjunction with the following figures:
Figure 1 depicts an example integrated beverage system according to one embodiment.
Figure 2 depicts an example method of coffee bean marking, verification, preparation, and brewing according to one embodiment.
Figure 3 depicts an example method of coffee bean marking, verification, preparation, and brewing according to an alternate embodiment.
Figure 4 depicts an example method of coffee marking, verification, preparation, and brewing according to one embodiment.
Figure 5 depicts a front cross-section view of an integrated coffee system that includes a roasting system and a brewing system according to one embodiment.
Figure 6 depicts a front cross-section view of an integrated coffee system that includes a roasting system, a grinding system, and a brewing system according to one embodiment.
Figure 7 depicts a front cross-section view of an integrated coffee system that includes a grinding system, a roasting system, and a brewing system according to one embodiment.
Figure 8 depicts a side view of an integrated coffee system depicting a stationary coffee container and a roasting system, a grinding system, and brewing system configured to move relative to the stationary coffee container according to one embodiment.
Figure 9 depicts a top view of an integrated coffee system depicting a movable coffee container that can be positioned initially with an installation system, moved to a scanner, moved to a roasting system, moved to a grinding system, and moved to a brewing system according to one embodiment.
Figure 10 depicts a perspective view of a coffee bean that has been marked for verification according to one embodiment.
Figure 11 depicts a perspective view of a coffee container configured to retain a plurality of coffee beans according to one embodiment.
Figure 12A depicts a partial exploded view of a coffee container configured to retain a plurality of coffee beans in a single-bean arrangement according to one embodiment, where the container is shown populated with a plurality of coffee beans.
Figure 12B depicts an exploded view of the coffee container shown in FIG. 12A.
Figure 13A depicts a container for a plurality of coffee beans that can be configured such that coffee bean roasting, grinding, and brewing can occur within the container according to one embodiment.
Figure 13B depicts an exploded view of the container of FIG. 13A.
Figure 14 depicts a container for a plurality of coffee beans that can be configured such that coffee bean roasting, grinding, and brewing can occur within the container according to an alternate embodiment.
Figure 15A depicts a container for a plurality of coffee beans that can be configured such that coffee bean roasting, grinding, and brewing can occur within the container according to an alternate embodiment.
Figure 15B depicts a side cross-section view of the container shown in FIG. 15A taken along A-A.
Figure 16 depicts the container of FIG. 13, where the container is shown prior to being engaged with a roasting system according to one embodiment.
Figure 17 depicts the container of FIG. 13, where the container is shown after engagement with the roasting system of FIG. 16 according to one embodiment.
Figure 18 depicts the container of FIG. 13, where the container is shown engaged with a grinding system according to one embodiment.
Figure 19 depicts the container of FIG. 14, where the container is shown engaged with a brewing system according to one embodiment.
Figure 20 depicts a partial cutaway view of a roasting system and the movement of a plurality of coffee beans within the roasting system according to one embodiment.

### Detailed Description

Reference throughout the specification to "various embodiments," "some embodiments," "one embodiment," "some example embodiments," "one example embodiment," or "an embodiment" means that a particular feature, structure, or characteristic described in connection with any embodiment is included in at least one embodiment. Thus, appearances of the phrases "in various embodiments," "in some embodiments," "in one embodiment," "some example embodiments," "one example embodiment, or "in an embodiment" in places throughout the specification are not necessarily all referring to the same embodiment. Furthermore, the particular features, structures or characteristics may be combined in any suitable manner in one or more embodiments.

Systems and methods described herein can integrate roasting, grinding and brewing of coffee into a single machine, where customers can precisely adjust the coffee at each stage of the process to suit their preferences. Example embodiments can include providing unroasted green coffee beans in single serve pods, which can eliminate the need for high cost bulk roasting and the accompanying higher consumer cost. Such a system may create a new market for green unroasted coffee beans. Example embodiments described herein can use an integrated coffee system to produce a cup of coffee from unroasted whole beans in less than 2 minutes, in less than five minutes, or at any suitable speed or time duration.

Various non-limiting embodiments of the present disclosure will now be described to provide an overall understanding of the principles of the structure, function, and use of the apparatuses, systems, methods, and processes disclosed herein. One or more examples of these non-limiting embodiments are illustrated in the accompanying drawings. Those of ordinary skill in the art will understand that systems and methods specifically described herein and illustrated in the accompanying drawings are non-limiting embodiments. The features illustrated or described in connection with one non-limiting embodiment may be combined with the features of other non-limiting embodiments. Such modifications and variations are intended to be included within the scope of the present disclosure.

Described herein are example embodiments of apparatuses, systems, and methods for an integrated beverage grinding, brewing, and/or roasting system. In an example embodiment, packaging for coffee is disclosed that can maintain the freshness of the bean while allowing easy distribution and verification of bean authenticity. In an example embodiment, an integrated coffee system can grind, roast, and brew coffee within a single system. In some embodiments, the integrated coffee system can be configured to accept unroasted coffee beans in single-serving packages. In some embodiments, the integrated coffee system can be configured to accept ground, unroasted coffee beans for roasting and brewing within an integrated coffee system.

The examples discussed herein are examples only and are provided to assist in the explanation of the apparatuses, devices, systems and methods described herein. None of the features or components shown in the drawings or discussed below should be taken as mandatory for any specific implementation of any of these apparatuses, devices, systems or methods unless specifically designated as mandatory. For ease of reading and clarity, certain components, modules, or methods may be described solely in connection with a specific figure. Any failure to specifically describe a combination or sub-combination of components should not be understood as an indication that any combination or sub-combination is not possible. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Example embodiments described herein may maximize coffee freshness and flavor by grinding or roasting coffee beans just prior to brewing. Unground green coffee beans, when stored properly, may be more flavorful than beans that are roasted and ground long before they are sent to and brewed by a consumer. For example, unroasted green coffee beans can be shipped to a consumer and can be roasted, ground, and then brewed within a single machine. Unground green coffee beans can be shipped as discrete single-use packages where, for example, unground green coffee beans can be roasted by a consumer just prior to brewing and drinking. Unground green coffee beans may retain sufficient freshness such that these "green" coffee beans can be marketed based upon a flavor profile and date of harvest. Additionally, or alternatively, unground beans and/or related packaging can be marked or otherwise carry indicia of origin, harvest date, or the like.

An integrated coffee grinding, roasting, and/or brewing computer system in accordance with the present disclosure can be accessed via any suitable technique, such as a web-browser such as SAFARI, OPERA, GOOGLE CHROME, INTERNET EXPLORER, or the like executing on a client device. In some embodiments, the systems and methods described herein can be a web-based application or a stand-alone executable. Additionally, in some embodiments, the systems and methods described herein can integrate with various types of integrated coffee grinding, roasting, and/or brewing systems, such as systems and methods that grind, roast, and brew within a single unit, and the like. Any suitable client device can be used to access, or execute, the integrated coffee grinding, roasting, and/or brewing computing system, such as laptop computers, desktop computers, smart phones, tablet computers, gaming systems, and the like.

Systems and methods described herein may generally provide an interactive environment for users (e.g., an optimized coffee grinding, roasting, or brewing experience) to provide granular control over coffee preparation. Interaction with the integrated coffee grinding, roasting, and/or brewing computer system may include, without limitation, keyboard entry, touchpad entry, voice recognition, physical buttons, writing from pen, stylus, finger, or the like, with a computer mouse, or other forms of input (voice recognition, etc.). The integrated coffee computer system may be presented on a tablet, desktop, phone, board, or paper. In one embodiment, the user may interact with the integrated coffee computer system by writing with a smart pen on normal paper, modified paper, or a hard flat surface of their preference. In this embodiment, the user may receive real-time feedback, or at least near real-time feedback, or may synchronize with the integrated coffee grinding, roasting, and/or brewing computer system at a later date. The integrated coffee grinding, roasting, and/or brewing computer system can be a personal computer, or one or multiple computers in server-type system.

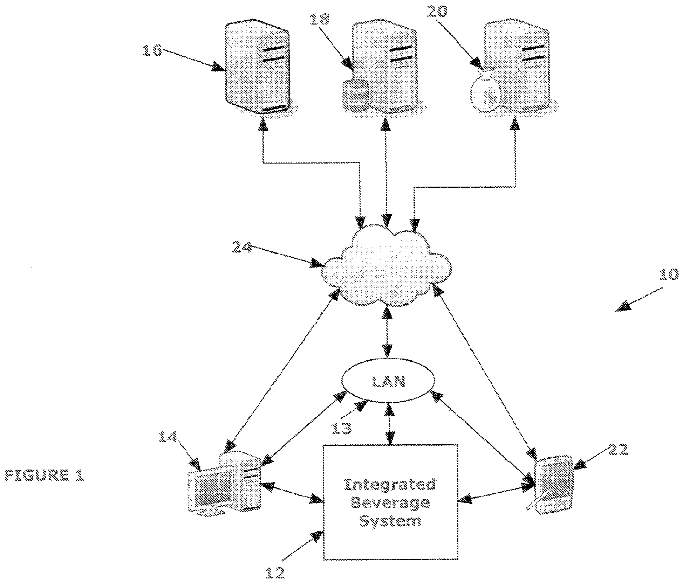

Referring now to Figure 1, disclosed is one embodiment of an interactive beverage system 10 that can include an integrated beverage system 12. The integrated beverage system 12 can be configured to grind, roast, or brew any suitable beverage, such as coffee. The interactive beverage system 10 can include the integrated beverage system 12 and any suitable network of peripheral data or component connections. For example, the integrated beverage system 12 can be coupled with a personal computer 14 or smartphone 22, such that a user can communicate with or control the integrated beverage system 12. Communication can be wired or wireless and can include short-range wireless interconnection of cellular phones, computers, and other electronic devices, wired USB, or any other suitable connection. It will appreciated that communication with the integrated beverage system 12 can be two-way, where the integrated beverage system 12 can push or otherwise transmit any suitable data, notifications, or the like to any suitable component or peripheral device. Such data or commands can include turning the machine on or off, choosing a recipe, adjusting recipe parameters, determining when a beverage will be ready, indicating whether the integrated beverage system is busy, or the like. The integrated beverage system 12 can include a transmitter and/or receiver that can be configured to send and/or receive information in communication with any suitable device or source. Data can also be transmitted or received from a local area network (LAN) 13, a cloud 24, or from any other suitable source. It will be appreciated that the personal computer 14, smartphone 22, or any other suitable peripheral device or data can be associated with the manufacturer of the integrated beverage system, where data can be sent through the cloud 24 to a user's integrated beverage system 12. Such communications can include software updates, new product offerings, new recipes, personalized messages, requests for information, or the like.

The integrated beverage system 12 can be coupled with or communicate via the cloud 24 with a server 16, a database server 18, or an ecommerce server 20. It will be appreciated that server 16 can communicate, store, or process any suitable data or information related to the integrated beverage system 12. The database server 18 can maintain any suitable information or data related to the integrated beverage system including, for example, coffee package verification data, user verification data, coffee bean verification data, usage data, software upgrade information, user preferences, stored roasting programs, stored grinding programs, stored brewing programs, stored dispensing programs, or the like. The integrated beverage system 12 can be coupled with the ecommerce server 20, or any other suitable ecommerce platform, where purchases can be made automatically or manually. For example, the ecommerce server 20 can maintain user financial information, such as credit card information, and can automatically determine when a user's supply of coffee is below a threshold and automatically order additional coffee based upon the user's preferences stored in the database server 18. It will be appreciated that any suitable storage device retaining any suitable information, such as recipes or personal preferences, can be coupled or can be integral with the integrated beverage system 12. It will be appreciated that data can be transmitted to, received from, and stored within the cloud 24.

The integrated beverage system 12 can include an internet connection and can upload and download information to/from computer servers, such as servers 16, 18, 20, that can be attached to the internet. These servers can be owned and maintained by a company selling the integrated beverage system 12, which can provide consumers with a variety of functions. A website can also be associated with the integrated beverage system 12 that can have information to educate the consumer about the coffee beans and the provenance/terroir of the coffee beans in pods. This information can include professional tasting ratings, user generated feedback forums on taste, and information about the source of each pod. The website can allow for the auctioning or trading of coffee pods, can verify the pods for authenticity, or can include any other suitable information.

Containers, pods, packages, or any other suitable coffee bean retainer can be sold with optimized preparation recipes encoded as described herein. However, the consumer may choose to experiment with process parameters to suit individual taste. The user can decide to upload their personal recipe for a specific pod to the website for free access by all, or may choose to upload the recipe and charge others for access. The website can handle the transaction and can take a percentage of the sale price for facilitating the transaction. Chefs or celebrities can create branded recipes specific to each type of pod or package.

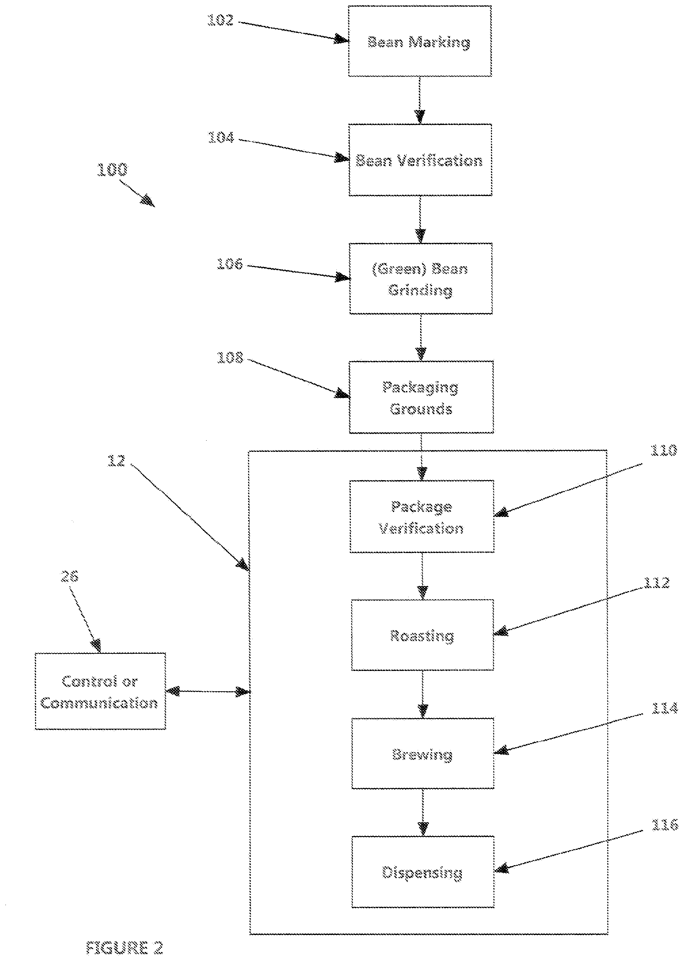

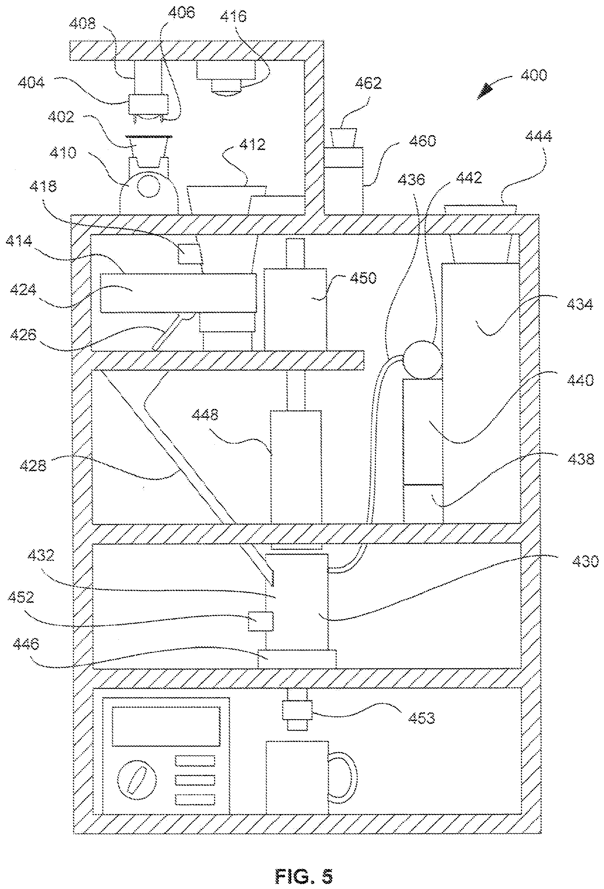

Figure 2 depicts an example embodiment of a method 100 for providing coffee to a consumer. Method 100 can be performed at least partially by the interactive beverage system 10 or the integrated beverage system 12. It will be appreciated that any suitable steps of the method 100 can be performed by the integrated beverage system 12 or can be performed independently from the integrated beverage system 12. In an example embodiment, the method 100 can be performed with an integrated beverage system 400 depicted in FIG. 5. Long preparation times may delay customer consumption of coffee and customers may seek other options if preparation time is too long. Traditional coffee roasting can be a time consuming process that can take 10 to 20 minutes for the roasting to occur and the full batch process time can exceed 30 minutes. This length of time may be too long for the consumer to wait for coffee preparation. Methods, apparatuses, and systems described herein can rapidly roast, grind, and/or brew coffee such that the entire preparation process can be performed automatically in less than one minute, in about 1 to about 2 minutes, in about 2 to about 3 minutes, in about 3 to about 5 minutes, in about 5 to about 7 minutes. These time ranges for coffee preparation are within the ranges acceptable for a consumer to wait while providing an entirely new coffee drinking experience to the consumer. It will be appreciated that systems, devices, or tools associated with the integrated coffee system 12, including grinding, roasting, or brewing tools or systems, can be engaged with, associated with, coupled with, can interact with, can be operable to work with, or can otherwise be used with coffee beans or coffee grounds.

The method 100 can include the step of Bean Marking 102. Coffee has evolved in recent years from a widespread commodity product with 'generic' tasting coffee products to specialty coffee where specific beans, origin location, microclimates, growing conditions, year of production, and processing conditions are tracked and marketed. These variations in the source beans can affect the taste of the coffee beverage and thus can be tracked and marketed to a final consumer. Coffee has many aromatic compounds that affect aroma and taste and coffee contains more aromatic compounds than wine. Coffee can be marketed by region, year of packaging, vineyard, year of harvest, time of year harvested, plantation or farm, type of bean, elevation, time of day sun hits the coffee plant, microclimate, bean processing, picking method, de-pulping, drying, dry process, wet process, shipping and storage method, exact weather conditions at the source during the growing season, satellite weather data, or by any other suitable parameter or characteristic. In an example embodiment, providing an unroasted product to a consumer may help retain the characteristics of the bean, where such a model may be attractive to consumers. The step of Bean Marking 102 can provide assurance to the end consumer that the product, such as unroasted green coffee beans, being purchased is genuine and not counterfeit. This can allow the consumer to verify the authenticity of the purchase and to possibly sell that product in the future for value that may increase or decrease.

Coffee plants are grown in approximately 50 countries worldwide typically in the tropical regions of the world at high elevations. The coffee cherry is generally picked from the plant and after several process steps, dried green coffee beans are produced. These beans can vary widely in quality and taste leading to a large difference in price. Commodity green coffee beans may be priced significantly lower than specialty green coffee beans, which may have a specific taste and origin. However it may be difficult for a person to determine the origin of a green coffee bean by physical observation and thus expensive beans may be easily counterfeited.

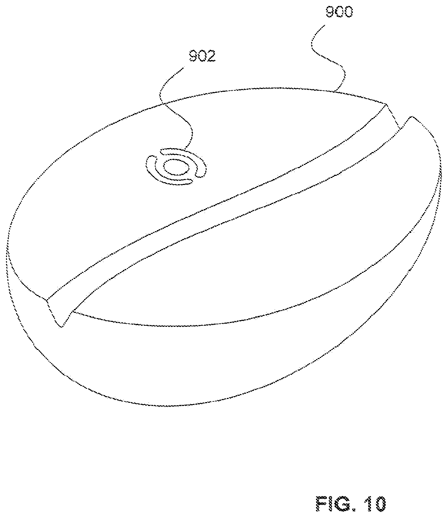

The step of Bean Marking 102 can include laser marking, mechanical marking, or any other suitable system or mechanism for determining, indicating, or validating the type, origin, age, or the like, for a coffee bean. Referring to FIG. 10, one example of a coffee bean 900 is illustrated having a marking 902. It will be appreciated that the marking 902 can be placed on any suitable region of the coffee bean 900 and can have any suitable size, shape, or configuration. Laser marking can be applied to individual coffee beans with a custom code, regional code, or the like, that may be difficult or impossible to copy. The marking instrument can include a diode laser, fiber laser, CO2 laser, or any other suitable type of laser. Laser marking can include short pulse, high peak power lasers that can minimize heat damage to surrounding areas of the green bean outside where the beam hits. Penetration depth of the laser can be varied and can depend on wavelength and peak power, where it may be advantageous to minimize penetration depth such that the inside of the bean remains substantially unharmed. The curved side or the flat side of a bean can be marked. In an example embodiment, the surface of bean can be marked without damage or with minimal damage to the inside of the bean. Mechanical marking of the surface of a coffee bean with a specific code, for example, can also be performed without damaging the inside of the bean using, for example, a blade or a stamp. Bean Marking 102 can include the application of visual marking material to a coffee bean in, for example, a custom pattern. Example markings can include fluorescent materials that can emit only when stimulated with the proper external optical stimulus. These materials can be organic (e.g., green fluorescent protein or other materials) or inorganic. Biologically safe materials and materials that can burn off during coffee roasting can be used to leave no trace in appearance or taste. It will be appreciated that the step of Bean Marking 102 can be performed at any suitable location or time including, for example, at a coffee farm or processing plant prior to the coffee beans being packaged or shipped to consumers.

Still referring to FIG. 2, the method 100 can include the step of Bean Verification 104. Consumers may wish to validate characteristics of coffee beans, such as origin, age, type, or the like. In an example embodiment, Bean Verification 104 can include mechanically, electronically, optically, or manually reviewing the imprint, code, or the like associated with the Bean Marking step 102. For example, a warehouse receiving beans from around the world can be equipped to electronically read and/or record the imprint, code, or indicia on the beans to confirm the authenticity of each bean. Additionally, or alternatively, the integrated coffee system 12 can be equipped to read the imprint, code, or the like associated with coffee beans to confirm authenticity. In one embodiment, the scanned or otherwise recorded information can be compared by an integrated coffee system 12 against data in the database server 18 (FIG. 1) to determine coffee bean authenticity.

Bean Verification 104 can include DNA verification, where DNA sequencing of beans can be performed on reference bean samples from desired locations. Bean Verification 104 can be performed at any stage during the method 100 and can be performed at a farm, warehouse, distribution site, or by the integrated beverage system 12. DNA sequence data can be stored, such as in the database server 18, and compared to DNA sequence data of coffee beans at a later date to verify origin of the bean. In an example embodiment, bean roasting can occur just prior to consumption, where Bean Marking 102 and Bean Verification 104 can be combined with any other suitable anti-counterfeiting method or system to maintain the integrity and reliability of coffee beans through the distribution chain until the final preparation. Delaying roasting until just prior to preparation may help maintain the integrity of markings and DNA associated with Bean Marking 102 and Bean Verification 104.

Bean Verification 104 can include any suitable evaluation of parameters to validate the origin or terroir of coffee beans, including characteristics of the geography, geology and climate of certain places, which may affect coffee taste. Food provenancing, which is the chronology of the ownership or location of a historical object, can be applied to coffee beans just as it is frequently applied to other foods and beverages such as wine. Bean Verification 104 can include using spectroscopic methods to verify provenance of coffee beans by measuring spectroscopic data (e.g., molecular compounds, ratios of different elements, etc.) from regions, locations, climates, etc., and creating a library of this bean spectroscopic data. This library of data, which can be stored in the database server 18, can be used to compare against spectroscopic measurements by the integrated beverage system 12 or for verification if the provenance of any bean is called into question. Spectroscopic techniques can include mass spectrometry, laser spectroscopy, LIBS (laser induced breakdown spectroscopy), ICP-MS (inductively coupled plasma mass spectrometry), or any other suitable methods. A spectroscopic signature can help verify provenance of coffee bean growth and the subsequent ability to verify beans after packaging into coffee pods or packages as described herein.

Method 100 can include the step of Bean Grinding 106. In an example embodiment, coffee beans can be ground prior to roasting, where the coffee beans can be ground in a "green" condition to any suitable size. Size of grounds can range for example from about 10um to about 100um, from about 100um to about 500um, from about 500um to about 1000um, or from about 1000 to about 3000um. Grinding coffee beans prior to packaging and roasting may make the roasting process, particularly if performed by the integrated beverage system 12, more efficient, while at the same time may preserve the freshness of the coffee beans as compared to traditional coffee beans that are roasted and then ground. The unroasted coffee bean grinding process can take place in a factory or other suitable setting as is commonly known in the art. It will be appreciated that any suitable size or shape of grounds can be created as will be apparent to one of ordinary skill in the art. In an alternate embodiment, the step of Bean Grinding 106 can include partially roasting the coffee beans prior to grinding the coffee beans, where partially roasting the beans may help maintain freshness but make a subsequent roasting process more efficient. In an alternate embodiment, the step of Bean Grinding 106 can include grinding green coffee beans to a first particle size, such as a coarse grind, where the coffee grounds can then be packaged. The integrated beverage system 12 can then be configured to further grind the coffee grounds from the first particle size to a smaller particle size, such as into a fine ground. It will be appreciated that any suitable step of roasting, grinding, or brewing can be performed in any suitable order and each step can be performed multiple times if desirable.

Method 100 can include the step of Packaging Grounds 108. Packaging Grounds 108 can include the use of single serve coffee containers, such as container 402 shown in FIG. 5, or packages for consumer preparation of coffee in single cup portions. Advantages of coffee pods can include convenience, single serve preparation so that coffee does not sit aging in pots, and the ability for a consumer to choose amongst pod types. Discrete coffee pods or packages can include small plastic or metal containers with ground unroasted coffee and filter material, such as filter paper or metal mesh, inside. Unroasted green coffee beans can be ground and packaged into small enclosed containers, such as pods, where each pod can contain enough green coffee grounds to ultimately produce one serving of coffee. The pod can be hermetically sealed or otherwise configured to preserve freshness. Pods can be used with the integrated beverage system 12 or the interactive beverage system 10, for example. Ground green coffee beans may have a long shelf life and may not degrade rapidly as compared to ground and roasted coffee beans, or unground roasted coffee beans. Packaging Grounds 108 can include filling the ground coffee container with a gas, or any other suitable substance, to help preserve the enclosed grounds. This fill gas can be atmospheric air, nitrogen, inert gas, noble gas, or the pod can be vacuum packed. In an example embodiment, the pod can be filled with positive pressure gas (e.g., nitrogen, noble gas, or others). Each pod can contain approximately from about 0.1 to about 2 grams, from about 2 grams to about 10 grams, from about 10 grams to about 70 grams of ground green coffee beans. In certain cases, certain beans are known to improve with age and exposure to air, where pods containing such grounds may be packaged with a breathable membrane that can allow for the exchange of atmospheric air. The package or pod can be marked with an information code or bar code that can contain information about the grounds in the pod. Packages can be deliberately designed to be hard to reproduce to act as an anti-counterfeit measure. The pod can be made of recyclable materials or biodegradable materials. In an alternate embodiment, the quantity of green coffee beans within a package can be adjusted depending on the type of roast contemplated, as beans lose weight during roast due to the loss of water from the bean during the roast process. For example, a dark roasted bean generally loses more water weight than a lightly roasted bean, where the quantity of beans within a pod can be adjusted to the appropriate amount at the time of packaging to account for this roast loss.

Method 100 can include Package Verification 110. Pod or Package Verification 110 can include imprinting the pod with a code, bar code, or other data that can be read by a scanner 404 of the integrated beverage system 400 (FIG. 5). Package Verification 110 can also include near field communication (NFC) methods, RFID, or other electronic components integrated into the pod that may be queried by wireless or wired means. Package Verification 110 can allow the integrated beverage system 400 to verify the authenticity of a coffee pod, such as container 402, and can prevent fake containers from working in the integrated beverage system 400. Encoded bean information and optimum preparation recipe instructions can be provided on the packaging that can be read and used by the integrated beverage system 400. Package Verification 110 can also include anti-tampering features or data. The information, code, data, or the like can be printed on the package in any suitable form, such as a form invisible to the naked eye, to preserve the aesthetic appeal of the pod. One such example of an invisible code to the naked eye can include printing the code using phosphors that emit light when excited by higher energy light. A light emitting diode can be used to excite the phosphors and a camera can be used to read out the resulting information. The flash and camera contained in a smartphone can be used, for example. The container 402 can include features that can prevent tampering or can indicate if tampering has occurred. One embodiment can hermetically seal the container 402, where a leak detector can be used to identify tampering. The container can be designed such that noninvasive measurement of the spectral features of the beans can be performed to verify provenance of the bean. In an example embodiment, a transparent window can be formed in a portion of the container that can allow for noninvasive laser spectroscopic measurements. Invasive tools can also be used that can take a sample from the bean, where the tool could be designed to puncture the container and self-seal the puncture when the tool is retracted. It will be appreciated that the scanner 404 can communicate with the interactive beverage system 10 to transmit data relative to the verification.

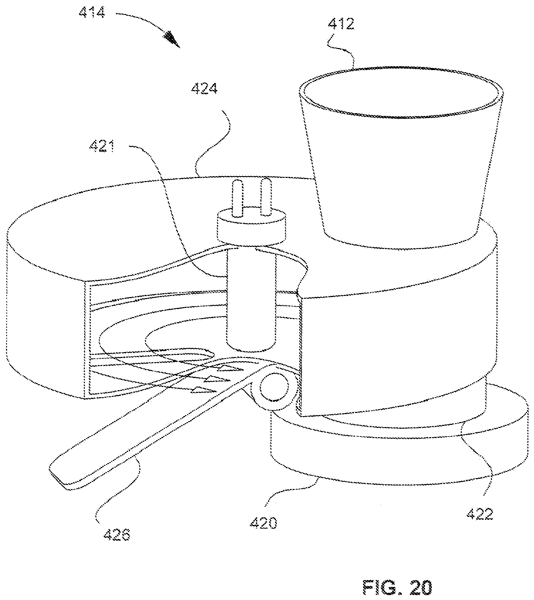

Referring to Figure 5, containers 402 can be designed in conjunction with the integrated beverage system 400 such that the integrated beverage system 400 can automatically open the pod upon insertion. For example, the integrated beverage system 400 can include a cutter 406 that can be associated with a motor 408 that can include an actuator or linear actuator to engage and rotationally cut the seal away from the container 402. The integrated beverage system 400 can include a stepper motor 410 that can be configured to rotate and expel the contents of the container 402 into a funnel 412 leading to a roasting system 414. An example roasting system 414 is illustrated in more detail with reference to Figure 20. The integrity of the roasting process can be monitored by a camera 416 or the camera output can be used to adjust roasting parameters in a real time control loop. Any suitable package, pod, container, or packaging methods can be used to create a container 402 that can be designed for long life with reduced bean or ground degradation. Packages can be configured for storing, collecting, trading, and consuming specialty green coffee grounds in an analogous manner as to how fine wine is collected, stored, traded, and ultimately consumed. Fine wine may go up or down in value as the provenance or taste of the specific wine gains or loses reputation amongst collectors of wine; and due to supply and demand constraints. Similarly, fine green coffee grounds may have analogous taste and aroma characteristics that cannot be artificially duplicated, which can create a tradable value amongst connoisseurs.

Referring to Figure. 2, Method 100 can include the step of Roasting 112. Method 100 illustrates one version of a method of grinding green coffee beans, roasting the ground green coffee beans, and brewing coffee. Method 100 can introduce green coffee beans to the Roasting 112 step that may be ground to a small size, which can result in more surface area exposed to heat during roasting which can enable faster, more uniform, heat transfer throughout the green coffee bean particles. It will be appreciated that any sized grounds are contemplated. Providing small grounds can allow for more uniform roasting and faster roasting, which may be desirable. It will be appreciated that the steps of roasting, grinding, and brewing can be performed as three separate discrete steps. However, as described herein, partial or complete overlapping of these steps in time or space is contemplated and may reduce the total time required to make coffee. For example, the roasting and grinding may occur in the same vessel and the grinding may begin as some beans are roasted. Another example is that grinding and brewing may occur in the same vessel and the grinding may occur in a wet grind process which can initiate the brewing process. Other variations of combining process steps can occur.

Referring to FIG. 5, the integrated beverage system 400 can have an array of sensors 418 built in to measure process parameters along with feedback control systems to optimize the performance of each step described herein. For Roasting 112, such sensors can include a camera/color sensor to determine color change of beans during roasting, a humidity/water sensor to measure the water content in the roasting chamber, humidity sensor for ambient local air, a carbon monoxide sensor, a carbon dioxide sensor to measure CO2 emission during roasting, an optical spectroscopy system to measure chemical emissions during roasting, a temperature and time measurement along with roast profile control, a microphone sensor to listen for noise emissions during roasting, a gas chromatography or mass spectrometer to measure molecular species during roasting, or any other suitable sensor.

Roasting 112 can include roasting of coffee grounds in single serve portions with the green coffee grounds provided in small pods. The roasting can occur within a few minutes and can roast, for example, from about 0.1 to about 2 grams, from about 2 to about 10 grams, or from about 10 to about 50 grams of grounds. The composition of the gas in the roasting chamber can be controlled as desired to be air, or some other mix of gases to aid in roasting. The integrated beverage system 400 can rapidly rise in temperature from ambient temperature of approximately 20 degrees Celsius to several hundred degrees Celsius in a precisely controlled manner. An ultrafast heater temperature increase ramp rate can be utilized that can be in the range of from about 1 to about 10 C/second, from about 10 to about 50 C/sec, from about 50 to about 100 C/sec, from about 100 to about 200 C/sec, from about 200 C/sec and higher, or combinations thereof. At the end of Roasting 112, the temperature can be rapidly cooled and the temperature decrease ramp rate can be in the range of from about 0.1 to about 10 C/second, from about 10 to about 50 C/sec, from about 50 to about 100 C/sec, from about 100 to about 200 C/sec, or combinations thereof. The overall time for roasting can be in the range of from about 1 to about 30 seconds, from about 30 to about 60 seconds, from about 60 to about 90 seconds, from about 90 to about 120 seconds, from about 120 to about 300 seconds, or any other suitable time. Roasting 112 can include a rapid heating method to roast the grounds and this heat can be applied by convection, conduction, radiation, or by any other suitable system or mechanism. Roasting can occur at temperature ranges of from about 200 to about 250 Celsius, from about 250 to about 300C, from about 300 to about 350C, from about 350 to about 400C, from about 400 to about 500C, or other such high temperature as desired. After Roasting 112, it may be desirable to rapidly quench the grounds (i.e., rapidly cool down the grounds) to stop the ongoing processes in the grounds due to latent heat inside the grounds. This may be done in one of several ways including, for example, water immersion quenching or forced air quenching of the beans or grounds. The water used to brew the coffee can serve to quench the heat of the beans, where the water used for brewing can be just under 100 Celsius in contrast to the several hundred degree Celsius roast temperature.

Roasting 112 can include a heating method that can enable the rapid temperature rise of the grounds. Referring to FIG. 5, a roasting system 414 can include an electrical resistor heating element 420 and a motor 422 associated with a fan (not shown) that can be used to heat and blow air into a chamber 424, where this air can heat the coffee beans through convective heating. It will be appreciated that Roasting 112 can include any suitable heating system or method such as laser heating, where a laser of specific wavelength, spot size, and power level can be directed via an optical system to the green coffee grounds, which can absorb the radiation and heat up. Laser heating of green coffee grounds can be used to rapidly roast green coffee beans. The use of a laser can allow for direct heating of the grounds without heating up the air or other space around the grounds. Laser heating may provide very precise delivery of heat to the grounds since the heat source can be removed when the laser is turned off or blocked. The laser can be operated in a continuous mode, pulsed mode or some sequential combination of these modes to provide the exact dose of thermal energy to optimize Roasting 112. The grounds can be agitated mechanically or with air to move them into the path of the laser beam. The laser beam delivery system can be mounted on a mechanical system to move the beam across the array of coffee grounds to be roasted. Optical systems can be used to distribute the laser light uniformly across the grounds, or can be used to create a desired illumination profile across the coffee grounds. The laser used for illumination can be a diode laser, a diode laser single emitter, an array of diode laser single emitters, a diode laser bar, a diode laser stack of bars, or any other suitable laser or combination of lasers. The laser diodes can operate in the visible wavelength range, the near infrared wavelength range, or other infrared wavelength ranges, for example. The laser wavelength of operation can be chosen to correspond with specific spectral absorption features of the coffee grounds. A potential benefit of operating in the near infrared wavelength range is the commercial availability of high power laser diodes that have been developed for other applications. Roasting 112 can also be performed using a combination of heating methods that can include the laser radiation method along with convective resistive heating. In another embodiment of optical heating methods, a light emitting diode (LED) can be used instead of the laser light source with an appropriate optical system to direct the light from LED to the coffee grounds. In another embodiment, microwave energy can be used to rapidly heat and roast the grounds.

Roasting 112 can also include radiation heating. Infrared or visible wavelength emission lamps can be used as the heating element. The green coffee grounds can absorb the radiated light from a bulb and heat up until roasted (the bulb can emit in the visible wavelength range, infrared wavelength range, or bands of wavelengths deemed desirable such as mid infrared, far infrared, etc.). The use of a lamp 421 (FIG. 20) can allow for fast roasting and direct heating of the green coffee grounds. The lamp can be operated in continuous, pulsed, or some combination of these modes to provide the exact dose of thermal energy to optimize roasting. Lamps emit light in multiple directions and some emitted light may not hit the grounds. Thus to efficiently use the optical energy, it may be preferable to use optical cavity designs to collect and direct the emitted light to the target coffee grounds. Such optical cavity designs can include elliptical reflective cavities, multi-ellipse cavities, circular reflective cavities, etc. These cavity designs can be applied to roasting coffee where the coffee ground are placed in a transparent tube at one focus of the ellipse and the lamp is placed at the other focus such that the elliptical cavity focuses light onto the coffee beans. The optical cavity can be designed to illuminate the beans with a desired intensity profile for specific roasting as desired. The roasting can also be done using a combination of heating methods including a lamp radiation method along with convective resistive heating (fluidized bed methods). Any suitable cavity design can be used to capture and direct light to a focal spot while also homogenizing the focal spot light intensity.

In some cases, it may be desirable to roast coffee beans with a hybrid convective and radiation based roasting system. An example of such a roasting system 414 is shown in Figure 20, and can include an electrical resistor heating element 420 and a motor 422 that can be used to heat air in a chamber 424, such that hot air can flow around the perimeter of the chamber and optical radiation can radiate from a central lamp 421. The lamp 421 can be chosen for wavelengths in any part of the visible or infrared wavelength ranges. A potential benefit of this type of roasting can be the decoupling of the heating source, which may be optical, from the air flow that can agitate the beans. This separation can allow the independent control of roast process variables. Infrared optical roasting of green beans may result in coffee with a higher anti-oxidant concentration than green beans roasted with convective roasting. A hybrid roaster can allow for the programmable control of the heating source that is used, and the amount of that heating source, such that a roasting program can be adjusted to optimize the anti-oxidant concentration of the resultant coffee. Caffeine concentration of brewed coffee beverage can vary with the degree of roasting, where darker roasts may have a lower caffeine concentration. A hybrid optical and convective roaster can allow the customer to roast to a desired taste profile, caffeine concentration, antioxidant concentration, or to other desirable parameters. Chlorogenic acid, which may aid in weight loss or weight control, can be controlled by programming and adjusting the roasting parameters of the roaster and roasting process.

During roasting of green coffee grounds, the color of the grounds can change from green to dark brown or black depending on the length of time roasted (longer time generally gives a darker color). Traditionally, these roast types and colors are denoted as cinnamon/New England, city/full city, Vienna, espresso, Italian, and French. Using quantitative measurements and methods such as precision imaging and signal processing, Roasting 112 can include a finer gradation in roast progress and thus much finer taste control. As the grounds are roasted, some smoke may be emitted and chaff may be released from the outside skin of the bean. The integrated beverage system 400 (for example, FIG. 5) can capture the smoke and/or the chaff such as with, for example, a catalytic converter, activated charcoal, or a filter 460 that can have an exhaust 462. During the roasting process the beans or grounds can emit a defined popping sound at different times during roasting known as first crack and second crack. These sounds can be indicative of roasting progress and audio monitoring of this sound, such as with sensor 418, with feedback control can be used to optimize roasting. During roasting, the beans or grounds emit an aroma that is pleasant to many people and a desirable trait to smell. The integrated beverage system 400 can include elements or features, such as containers or fans, to capture and disperse this aroma outside of the machine into the local environment for the pleasure of the consumer. In another embodiment, the integrated beverage system 400 can capture the aroma scent into a small hollow container, or container with porous polymer resins such as TENAX, or other device that can be opened later to release the aroma as desired by the user (or the aroma containment system could be attached to a coffee cup with aroma released in a time release manner, or at some later time).

Roasting 112 generally includes heat, where extra waste heat from this process can be used to heat or pre-heat the water needed for the brewing process. As one example, water can be passed over the hot beans or grounds after roasting, which can serve to quench the roasting process in the beans and heat the water. This can improve the energy efficiency within the integrated beverage system 12. Power efficiency in all steps of roasting, grinding, and brewing can be optimized or adjusted to provide the consumer with the highest quality coffee in the fastest possible time. As one example, the electrical power limit of most standard single phase electrical circuits in the US is approximately 1500 Watts. A roaster may consume up to, for example, 1500 Watts. A grinder may consume from about 100 to about 200 Watts, and a fast water heater or boiler for the brewing system may consume in the range of about 1000 to about 1500 Watts. In order to prepare a cup of coffee quickly, multiple stages can be operated in parallel or a stage can be prepared in advance so that it is ready (e.g., preheating the water to the desired temperature). Optimizing power efficiency of the roaster, or any other component, can allow parallel operations to take place such as heating the water while the roaster is in operation. Optical roasting may be advantageous because of the direct absorption of energy by the bean, which may allow the roaster to be more efficient and may keep power consumption below the common 1500 Watt limit. In some cases it may be desirable to modulate the aroma release such that the smell sensory system of the consumer does not become saturated and desensitized to the aroma.

The integrated beverage system 400 can include any suitable components or elements that can automate handling of the grounds to move them from stage to stage of Method 100. For example, moving the grounds from packaging to roasting to brewing. Robotic handling methods are contemplated are described in more detail herein. Referring to Figures 5 and 20, upon completion of Roasting 112, the roasting system 414 can open a trap door 426 that can allow the roasted grounds to gravitationally move down a chute 428 to a brewing system 430. It will be appreciated that any suitable mechanism or system to facilitate movement of the roasted grounds, such as a conveyor belt, is contemplated.

Referring to FIG. 2, the method 100 can include Brewing 114. Brewing 114 can include brewing particles that are ground and roasted. Brewing 114 can be performed by passing heated water through the grounds, which can extract the coffee into the liquid. Referring to FIG. 5, the integrated beverage system 400 can include a brewing system 430 that can include a brew chamber 432 that can accept the roasted grounds from the chute 428. The brew chamber 432 can be coupled with a water reservoir 434 via a tube 436. The water reservoir 434 can be associated with a heating element 438 and a water heater 440 such that heated water can be pumped with a pump 442 to the brew chamber 432. The water reservoir can include a funnel 444 such that water can be poured into the water reservoir 434. The water heater 440 and heating element 438 can include a rapid water heating system that can quickly bring water to the proper temperature for brewing coffee. The water temperature can be brought to boiling (212 F), or some other temperature range such as from about 150 degrees to about 160 degrees Fahrenheit, from about 160 degrees to about 175 degrees Fahrenheit, from about 176 to about 195 degrees Fahrenheit, from about 196 degrees to about 211 degrees Fahrenheit, or any other suitable temperature. A water temperature in the range of from about 195 degrees to about 205 degrees Fahrenheit is contemplated. It may be desirable to brew at relatively lower temperatures, such as with what is known as 'cold brew', which can result in a different taste of coffee. Cold brewing can be done at or near room temperature and the steep time can be many hours to days. In an example embodiment, overall water temperature can be reduced, by using high speed centrifugal forces in the brew extraction process to rapidly mix and agitate the grinds within the liquid water. A suitable balance of water temperature between ambient and 212F is contemplated, and high speed centrifugal forces can be used to quickly brew coffee to the desired taste.

Referring to FIG. 5, the coffee grounds can be retained within the brew chamber 432, where the brew chamber 432 can be associated with a filter 446 that can be positioned at the bottom of the brew chamber 432. The filter 446 can be paper or metallic mesh, for example. The coffee grounds can be tamped or compressed by the brew system 430 as desired where, for example, the brew system 430 can include a piston 448 that can be coupled with a motor 450. The pressure of compression can be varied by the integrated beverage system 400 as desired. This can be performed by controlling piston 448 movement or by use of an adjustable pressure relief valve that can control the release of coffee from the brew chamber 432. In some cases, multiple parallel pistons (not shown) can be used where the specific amount of grinds, quantity of hot water, the steep time, and other extraction parameters may be different for each piston and associated brew chamber to create varying taste profiles, where the output of all piston brewers can be mixed into one cup for consumption by the consumer. Water can be injected into the brew chamber 432 at high pressure or any other suitable pressure, including a drip method. The water pressure can range from about 0.1 bar to about 18 bar depending on the coffee type (e.g., coffee, espresso, etc.) desired and the desired taste of coffee. A refractometer or other sensors 452 can be incorporated into the integrated beverage system 400 and can provide real time measurement and feedback control of various brew parameters to optimize coffee taste. The amount of water used in making a cup of coffee can be from about 0.1 ounces to about 20 ounces, or any suitable amount. The brewing time can be less than one second, from about 1.01 second to about 30 seconds, from about 30.01 second to about 60 seconds, from about 60.01 seconds to about 120 seconds, from about 120.01 seconds to about 180 seconds, from about 180.01 seconds to about 300 seconds, from about 300.01 second or longer, or any other suitable time frame.

Referring to FIG. 2, the Method 100 can include Dispensing 116. Dispensing 116 can include dispensing the coffee or other prepared beverage from the integrated beverage system 400 (FIG. 5). Dispensing 116 can include dispensing the coffee via a nozzle or valve 453 into a cup or any other suitable receptacle. Cup sizes or other aspects of the delivery can be specified by the user or preprogrammed. Various other fluids or substances can be combined during Dispensing 116 where, for example, milk, creamer, sugar, whipped cream, sweetener, flavoring, vitamins, or other products can be added manually or automatically. Espresso-based drinks are contemplated and include espresso, cappuccino, latte, etc. In example embodiments, an integrated beverage system, as described herein, can be used with a tamping mechanism for grinds and the brewing components can be replaced or supplemented with a high pressure boiler system for the water. The pressurized hot water can be forced through the grinds and espresso extraction can occur. Additionally, the integrated beverage system can contain a milk heater, steamer, and/or frothing function. Such systems may be used in a professional cafe or restaurant setting, where it may be desirable to prepare multiple independent cups of coffee at the same time. A single machine can be configured with multiple components such that multiple cups of coffee can be made in parallel. Certain steps or components in such a system may be performed independently, such as roasting, grinding, or brewing, but some elements may be in common such as a common water heating system with valves or pumps to direct water to the appropriate location. Common electronic control systems can be used that can control multiple roasters, grinders, or brewers. Such a machine can also have a robotic handling system that can automatically choose and insert an appropriate coffee container from a variety of options, in accordance with a user's order, into the integrated beverage system for processing.

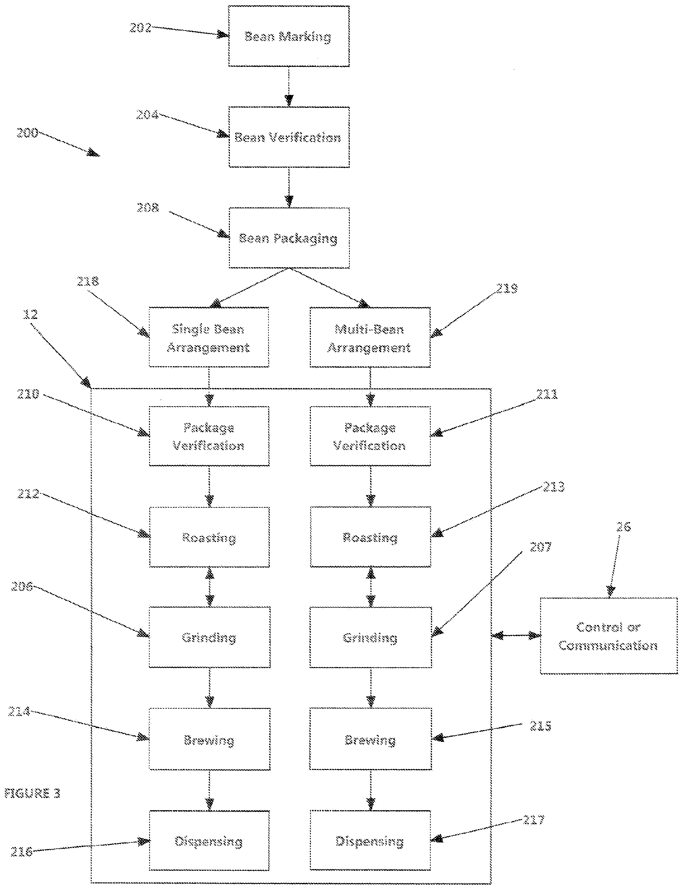

Referring to Figure 3, an alternate Method 200 is depicted for providing coffee to a consumer. Method 200 can be performed at least partially by the interactive beverage system 10, the integrated beverage system 12, or the integrated beverage system 500. It will be appreciated that any suitable steps of the method 200 can be performed by the integrated beverage system 500 or can be performed independently from the integrated beverage system 500.

The method 200 can include the steps of Bean Marking 202 and Bean Verification 204, which can be analogous to the steps of Bean Marking 102 and Bean Verification 104, respectively, as described with reference to FIG. 2.

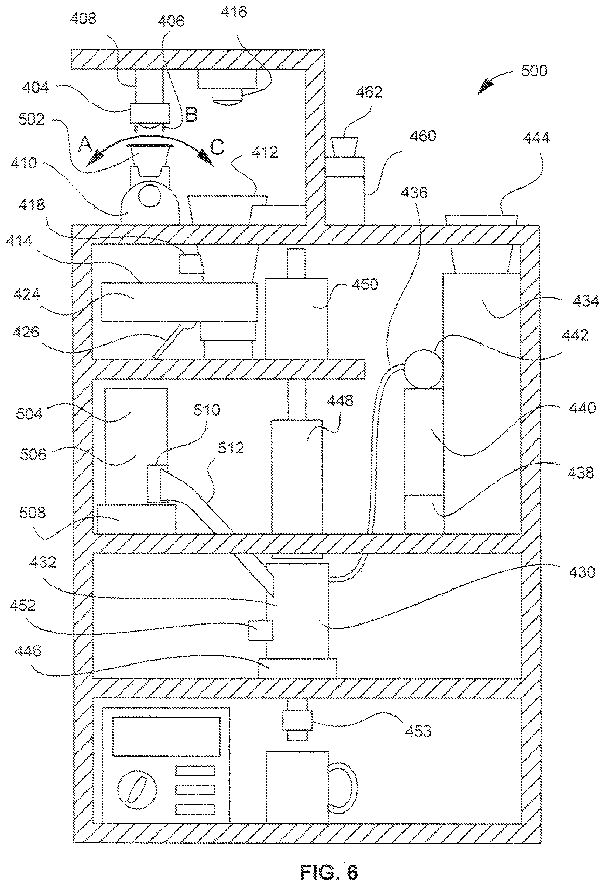

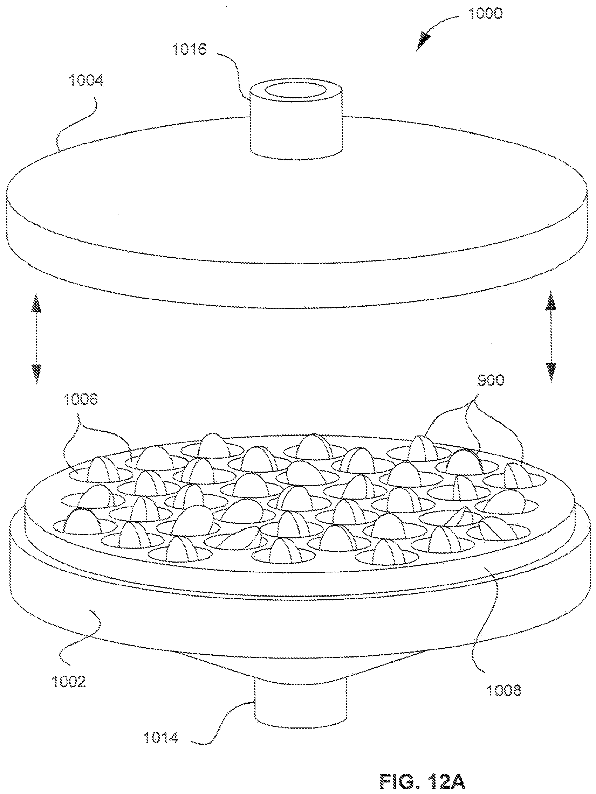

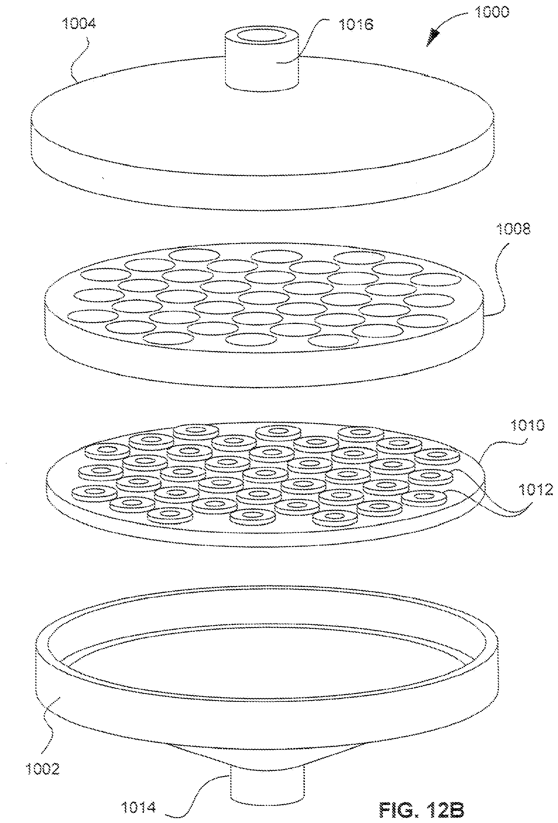

The method 200 can include the step of Bean Packaging 208. Bean Packaging 208 can be similar to, and can include the disclosure of, the step of Packaging Grounds 108 described in Figure 2. In an example embodiment, it may be preferable to package whole unroasted or "green" coffee beans prior to roasting or grinding. A single pod or container 1000 (FIG. 12) can be packaged and organized as a series of independent coffee beans (Bean Arrangement 218) or a container 502 (FIGS. 6, 10) can simply be filled and packaged with a predetermined number of coffee beans (Multi-Bean Arrangement 219). Coffee may degrade in freshness from the moment it is ground, where it may be preferable to package and ship unroasted whole coffee beans to consumers prior to grinding or roasting. Volatile organic compounds can be created during roasting that can make up at least a portion of the flavor of coffee, where these compounds may escape from the beans from the moment of roast ending such that the longer the roasted beans sit, the more VOC's are lost to the atmosphere. It may be preferable to retain the beans in an unroasted state for as long as possible.

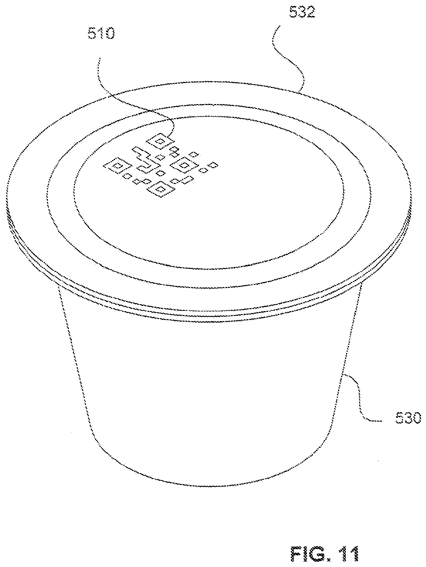

For the step of Bean Packaging 208, which can include the Single Bean Arrangement 218 (container 1000 shown in FIG. 12) and Multi-Bean Arrangement 219 (container 502 shown in FIG. 11) steps, green coffee beans can be packaged into small enclosed containers or pods where each pod can contain enough green coffee beans to produce one serving of coffee. The one or a plurality of pods or packages can be hermetically sealed with a seal 504 and can include a validation marking 510. These containers, such as container 502, can be used with the integrated beverage system 500. The container 502 can include a body 530 that can define a cavity configured to retain a plurality of coffee beans and a seal 532 that can be manually or automatically punctured, removed, or otherwise opened as described herein. Green coffee beans generally have a long shelf life relative to roasted coffee beans and do not degrade rapidly, where the shelf life of green coffee beans may be years or more if stored properly. An example container 502 can be filled with a gas to preserve the enclosed beans for long periods of time. Any suitable fluid or gas can be used including atmospheric air, nitrogen, inert gas, noble gas, or the pod may be vacuum packed. In some cases the pod may be filled with positive pressure gas (e.g., nitrogen, noble gas, or others). Each container 502 can contain approximately from about 0.1 to about 2 grams, from about 2 to about 10 grams, or from about 10 to about 70 grams of green coffee beans. In certain cases, certain beans are known to improve with age and exposure to air, where containers 502 containing such beans can be packaged with a breathable membrane that can allow for atmospheric air exchange.

In an example embodiment, beans can be pre-sorted and packaged with beans of a similar size and color into a single container 502. The value of this sorting may be that the roasting of the beans will progress similarly when exposed to heat and thus produce a uniform roast, which may be desirable. Such a sorting system can also detect spoiled or undesirable beans that may have phenol content or other impurities that impair taste of the final beverage. Containers 502, as described herein, can be marked to help verify the authenticity of the coffee pod, to prevent counterfeit pods from working in the integrated beverage system 12, to encode bean information and optimum preparation recipe instructions, to encode origin information, to prevent tampering, or to act as anti-counterfeit measures.

Referring to Figures 12A and 12B, the container 1000 can be configured such that each bean of a plurality of unroasted coffee beans 900 can be individually roasted by an integrated coffee system 12. The container 1000 can include a base 1002 that can engage with a lid 1004 such that a plurality of unroasted coffee beans 900 can be retained therebetween. The plurality of unroasted coffee beans 900 can reside within a plurality of cavities 1006 that can be defined by a tray 1008. Referring to Figure 12B, the tray 1008 can rest upon a thick film substrate 1010 that can include a plurality of thick film heaters 1012, where each of the thick film heaters 1012 can be configured to be in close proximity with each of the plurality of beans 900 held within the tray 1008. During operation, air can be forced through an intake 1014 in the base 1002 such that the plurality of thick film heaters 1012 can heat the local air to turn roast the plurality of unroasted coffee beans 900. The lid 1004 can include an exhaust 1016 that can be used to expel smoke or the like. It will be appreciated that any configuration for a container that can roast beans individually is contemplated. In an example embodiment, the container 1000 can be purchased as a contained unit where the container 1000 can be inserted into the integrated beverage system 12. After roasting, the container 1000 can be mechanically and automatically opened or otherwise emptied such that the roasted beans can be transferred to a grinding mechanism. The roasted beans can be removed, for example, by tipping over the container 1000, using a high fan speed associated with a heating element to eject the beans, or a vacuum that could be used to suction the beans out of the container 1000. In an alternative embodiment, single-bean roasting can be accomplished by having a common fan system and a common heating system that can blow hot air towards beans that can be arranged in pockets as shown in Figure 12A. In such an embodiment, an independent mechanical shutter can be positioned below each bean in the array that can allow air to flow to the bean when the shutter is open or can obstruct air flow when the shutter is closed such that roast control on an individual bean can be provided.

The container 1000 can be associated with an optical imaging system (not shown) with a camera that can monitor the color change of each bean during roasting. This information can be used with a feedback control system to turn on/off or adjust the heat and/or airflow to each bean independently. Other sensors described herein can also be used in conjunction with the camera for feedback control on either an individual bean basis or on an aggregate basis.

Bean Packaging 208 can include packaging coffee beans, where some processing step has already been performed on the beans prior to packaging. For example, the green coffee beans can be partially roasted and then packaged into the container 502 (FIG. 6), which may save roasting time when prepared by the consumer. The partial roasting can be performed, for example, in a manner that can preserve the freshness of the bean and can prevent or delay decaying or staleness of the bean relative to conventional roasting. For example, partial roasting could stop at or before "first crack" of the coffee bean.

The Method 200 of FIG. 3 can include the steps of Package Verification 210, 211, which can correspond with the step of Package Verification 110 described with reference to FIG. 2. Package Verification 210, 211 can be performed by the integrated beverage system 500, scanner 404, manually by the user, by inputting information into a personal computer 14, a smartphone 22, or any other suitable input device.

The Method 200 can include steps for Roasting 212, 213. As illustrated in FIG. 3, the Roasting 212, 213 steps can be performed by the integrated beverage system 500 and can include the disclosure of the Roasting 112 step described with reference to FIG. 2. Although Method 200 generally describes the steps for creating coffee in the order of roasting, grinding, and brewing as three separate discrete steps, it will be appreciated that any suitable order or combination is contemplated. For example, partial or complete overlapping of these steps in time or space is contemplated, where such a combination may reduce the total time required to make coffee. For example, the roasting and grinding may occur in the same vessel and grinding may begin as bean roasting begins. In an alternate embodiment, grinding and brewing can occur in the same vessel and the grinding can occur in a wet grind process which initiates the brewing process. Other variations of combining process steps are contemplated. In some cases it may be desirable to rapidly quench the roasting of the beans after external heat application has stopped. Heat internal to the beans may continue the roasting process. An alternate approach to rapid quenching can include quickly grinding the beans to increase surface area exposure to air. At this point, air can be flowed through the grounds to cool the coffee grounds. An alternate embodiment can include immersing the grounds in water, where the water is of lower temperature than the roasting temperature such that roasting can be quenched. The rapid quenching process can be performed by an integrated beverage system as described herein, or can be used separately for quenching roasted beans independent of any other machine.

In one embodiment, it may be advantageous to rapidly de-gas the carbon dioxide that can be built up in the bean during roasting. With typical roasting, the beans generally remain whole for some period of time after roasting. In one embodiment, the beans can be ground quickly after roasting, which can greatly increase the surface area of the beans exposed to air and can increase the rate that CO2 escapes from the beans or grounds. A vacuum can be provided in the chamber holding the grounds such that the pressure in the chamber can be reduced below ambient air pressure. This vacuum may be to levels such as about 0.5 atmospheres, about 0.1 atmospheres, about 0.01 atmospheres, about 0.001 atmospheres, or any other pressure level to aid in the rapid release of CO2 gas. In some cases it may be advantageous to illuminate the grounds with optical energy corresponding to the absorption wavelength of CO2 molecules such as 10.6um.

With reference to Roasting 212 in a Single Bean Arrangement 218, roasting of beans can be done on an individual basis, which may create uniform roasting and can optimize taste. The quantity of green beans needed for a single cup of coffee may range from 50 to 500 beans, where approximately 100 beans may be typical. Individual beans can be arranged in the single-serve container 502 such that each bean can be exposed to a radiative light based heating system (e.g., laser, LED, lamp, etc.), where the beans can be aligned in a pattern with a corresponding pattern of illumination sources (this can include a 1:1 mapping, or N:M mapping of sources to beans). This can include optical only roasting, convective roasting only, fluidized bed roasting, or hybrid optical/convective roasting. An optical system can be used between the sources and beans such that each bean is illuminated by one light source with the desired illumination pattern. Each light source can have individual power control or subarrays or the light source can have a single power control. By using a 1:1 mapping of light sources to beans, each bean can be illuminated and heated with individual control. A camera can be used to image the color of the beans and along with image processing algorithms can be used to provide feedback or individual power adjustment control to the individual light sources to optimize roasting (a wavelength selective filter can be placed in front of the camera to filter out the light used to roast the beans). In an example embodiment, the beans can be roasted to substantially the same degree of roast (e.g., color of roast) or a roast blend can intentionally be created where some beans can be roasted to a different degree purposefully to get a desired taste profile. In an alternate embodiment, instead of single bean cavities, several separate cavities can be created containing a subset of beans and corresponding lamps can be controlled separately based on feedback sensors to optimize roast within each cavity. The beans from plurality of cavities can, for example, be mixed before grinding. An array of resistive heating elements, with each element in contact with one bean, can be used as an alternative to a light-based heating system. It will be appreciated that any suitable system, method, or mechanism to individually roast a single bean, or a small number of beans, is contemplated.

The integrated beverage system 500 (FIG. 6) can have an array of sensors 418, 452 built in to measure process parameters along with feedback control systems that can optimize the performance of each step the machine performs. For roasting, such sensors 418 can include a camera or color sensor that can determine color change of beans during roasting, a humidity or water sensor that can measure the water content in the roasting chamber, a humidity sensor that can measure ambient local air, a carbon dioxide sensor that can measure CO2 emission during roasting, an optical spectroscopy system that can measure chemical emissions during roasting, a gas chromatography / mass spectrometry (GC/MS) system to measure chemical emissions, a temperature and time measurement sensor than can be combined with a roast profile control, or a microphone sensor to listen for first crack, second crack of the beans, or noise emissions during roasting.

The Method 200 can include the steps of Grinding 206, 207. The Grinding 206, 207 steps can be performed by the integrated beverage system 500 and can include the disclosure of the Grinding 106 step described with reference to FIG. 2. The integrated beverage system 500 can include any suitable grinder system 504 that can grind the roasted beans into any suitably sized particles. The grinder system 504 can accept the roasted beans from the trap door 426. The grinder system 504 can include a body 506, a motor 508, a grain-size filter 510, and a chute 512 that can convey roasted grounds to the brewing system 430. The average particle size can vary, for example, from between about 10 microns to about 2000 microns. An electrically powered grinder can be adjustable to a desired particle size. The grinder system 504 can include a blade grinder, a burr grinder, a disc burr grinder, a conical burr grinder, ultrasonic grinder, wet grinder, mortar and pestle grinder, or any other grinder. The grinder system 504 can be configured to produce a uniform particle size or particles having varying sizes. Grinding time can be from about 1 second to about 10 seconds, from about 10 second to about 30 seconds, from about 30 second to about 60 seconds, from about 60 second to about 120 seconds, or for greater than 120 seconds. The grinder system 504 can also be adaptively controlled such that the mechanical adjustment of grind size can be determined by the degree of roasting of the coffee beans performed in the integrated beverage system 500. The fracture mechanics of coffee beans in the grinder system 504 can depend on the degree of roasting such that darker roasts may fracture to finer particles than lighter roasts even when the mechanics of the grinder remain unchanged. It may be valuable to adjust grinder system 504 mechanics based on information about the degree of coffee bean roasting.

In an example embodiment, after Roasting 212, 214, the integrated beverage system 500 can automatically move the roasted beans from the roasting stage to the grinder system 504 using gravity or active transportation. After Grinding 206,207, the integrated beverage system can automatically move the grounds to the brewing system 430.

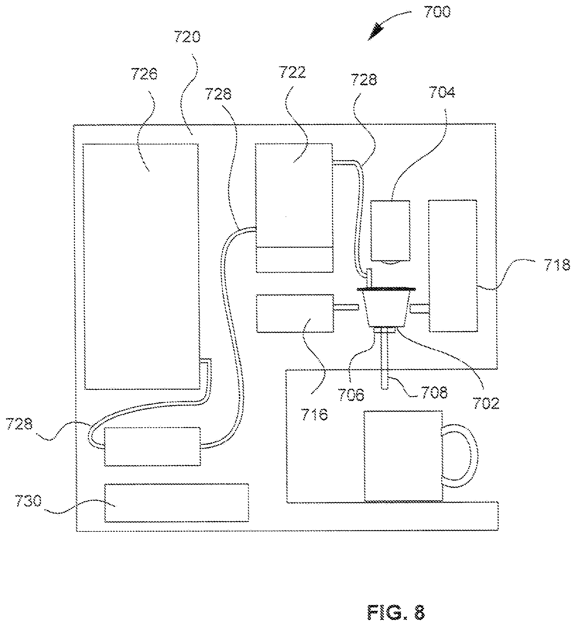

In an alternate embodiment, as will be described in more detail with reference to FIG. 8, after Roasting 212, 214, an integrated beverage system 700 can move a grinding tool 718 that can be associated with Grinding 206, 207 into proximity with roasted beans. After the beans are ground, the integrated beverage system 700 can move the equipment or components associated with Brewing 214, 215 into proximity with the roasted grounds. It will be appreciated that the beans and/or grounds can remain in substantially the same location, where the integrated beverage system 700 can move, rotate, or otherwise bring the tools associated with the Method 200 into proximity with the beans or grounds. In an alternate embodiment, the tools associated with the steps of the Method 200 can remain substantially stationary and the beans or grounds can be moved or otherwise transitioned between various stations. Grinding 206, 207 steps can include sensors such as optical sensors to visually monitor grind size, a vibration sensor (e.g., accelerometer) that can monitor progress of grinding, or a microphone that can measure noise from the grinder to determine grind size. The grind process makes audible noise, where it may be possible to use active noise canceling techniques along with an embedded audio speaker to mute or minimize the noise generated by the grinder. Similarly, other process steps such as roasting or brewing may make audible noise that can be minimized by active noise canceling methods.

The Method 200 can include Brewing 214, 215, which can include the disclosure of Brewing 114 described with reference to FIG. 2, and Dispensing 216, 217, which can include the disclosure of Dispensing 116 described with reference to FIG. 2. Brewing 214, 215 can include sensors 452 (FIG. 5) such as a sensor for water temperature, water pressure, water pH, optical absorption, optical color sensor, optical light scattering, optical polarization to measure coffee extraction from the grind, a refractometer that can measure coffee extraction, a surface plasmon resonance (spr) sensor that can measure other chemical parameters of brewing, or other chemical sensors.

In an alternate embodiment, with reference to Figure 8, some or all of the steps of Roasting 212, 214, Grinding 206, 207, and Brewing 214, 215 can be performed within a container 702 containing a single-serving size of coffee, where the container 702 can remain substantially stationary. The container 702 that can contain unroasted beans can be engaged by the integrated beverage system 700 such that one or a plurality of grinding, roasting, brewing, scanning, or any other suitable tools or systems act upon the container 702. The container can be installed onto a holder 806 that can also include a dispensing tube 708. The holder 706 can be configured to retain the container 702 throughout the roasting, grinding, and/or brewing process. The holder 706 can retain the container 702 as various tools move into proximity with or engage the container 702. A scanner 704 can initially confirm that the container 702 is not a counterfeit. After the scanner 704, the container 702 can be engaged by a roasting tool 716 for Roasting 212, 214. The roasting tool 716 can include, for example, hot air delivery and an exhaust. After Roasting 212, 214, the integrated beverage system 700 can engage the container 702 with the grinding tool 718 that can be associated with Grinding 206, 207, where any suitable tools, such as a burr grinder or ultrasonic grinder, can enter the container 702 to grind the beans as desired. The container 702 can then be engaged by a brewing tool 720 that can be associated with Brewing 214, 214, where the brewing step can occur wholly or partially within the container 702. The brewing tool 720 can include a hot water reservoir 722, a pump 724, and a water reservoir 726 that can be connected with tubing 728. In this manner, the steps of roasting, grinding, and brewing can occur within the container 702. A computer or control system 730 can guide the tools of the integrated beverage system 700 to engage the container 702.

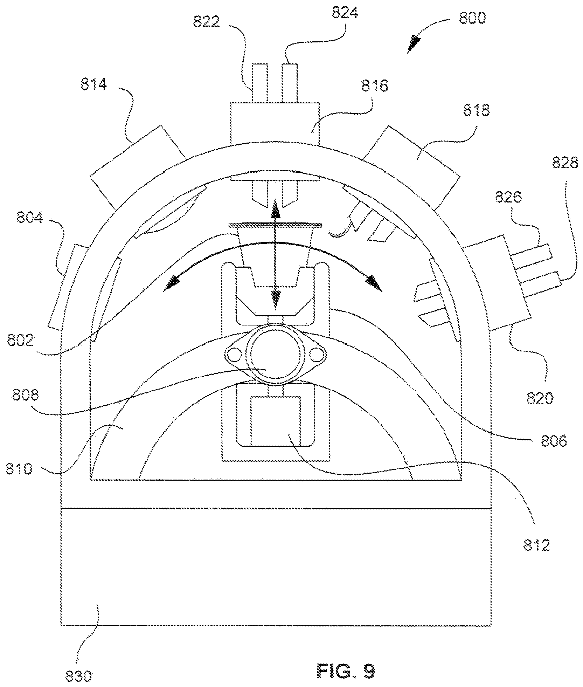

In another alternate embodiment, some or all of the steps of Roasting 212, 214, Grinding 206, 207, and Brewing 214, 215 can be performed within a package 802 containing a single-serving size of coffee, where the package 802 can be moved and the tools remain substantially stationary. For example, referring to FIG. 9, a package 802 containing unroasted beans can be transitioned by a beverage system 800 to a first station 804 that can install the package 802 into a movable holder 806 that can be associated with a stepper motor 808, a track 810, and a linear actuator 812. The holder 806 can be configured to retain the package 802 throughout the roasting, grinding, and brewing process. The holder 806 can transition the package 802 between various stations as the stepper motor 808 moves within the track 810 and where the linear actuator 812 can be configured to engage the package with each station. After the first station 804, the package 802 can be transitioned to a second station 814 that can be used to scan or validate that package 802. After completing the second station 804, the package 802 can be transitioned to a roasting station 816 for Roasting 212, 214. The roasting station 816 can include, for example, hot air delivery 822 and an exhaust 824. After Roasting 212, 214, the integrated beverage system 800 can transition the package 802 to a grinding station 818 that can be associated with Grinding 206, 207, where any suitable tools, such as a burr grinder or ultrasonic grinder, can enter the package 802 to grind the beans as desired. The package 802 can then be transitioned to a brewing station 820 that can be associated with Brewing 214, 214, where the brewing step can occur wholly or partially within the package 802. The brewing station 820 can include a hot water input 826 and a brewed coffee output 826 that can lead to a drinking receptacle. In this manner, the steps of roasting, grinding, and brewing can occur within the package 802 or pod. A computer or control system 830 can guide the stepper motor 808, transition the package 802, or otherwise move the package through the stations of the integrated beverage system 800. In an example embodiment, the package with green coffee beans can contain a resistive heating element that can mate to a current source in the integrated beverage system to roast coffee. In an alternate embodiment, the package can be transparent and can allow optical energy provided by the integrated beverage machine to impinge upon the beans and roast the beans. The integrated beverage machine can break a seal on the package or otherwise puncture the package as needed during these steps. Another approach to grinding is to apply sonic energy to the roasted beans to cause the beans to fracture into small particles; and/or high pressure water may be applied to the beans to cause them to fracture. Water may be injected into the pod in order to brew the coffee.

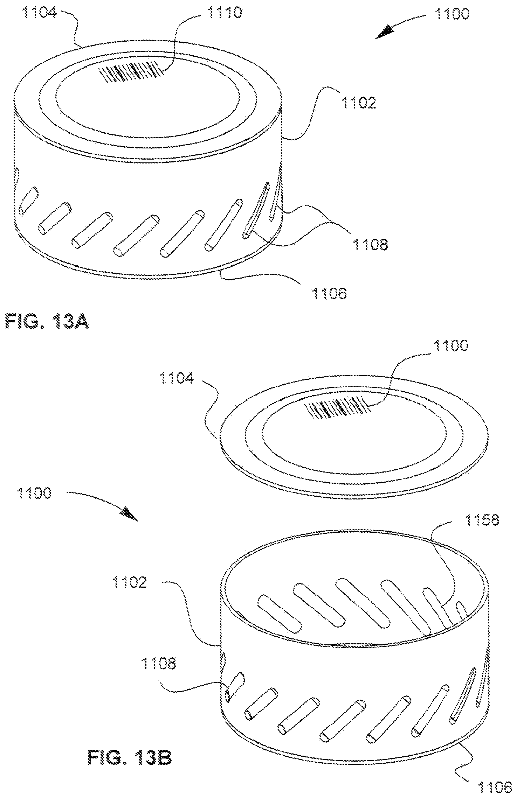

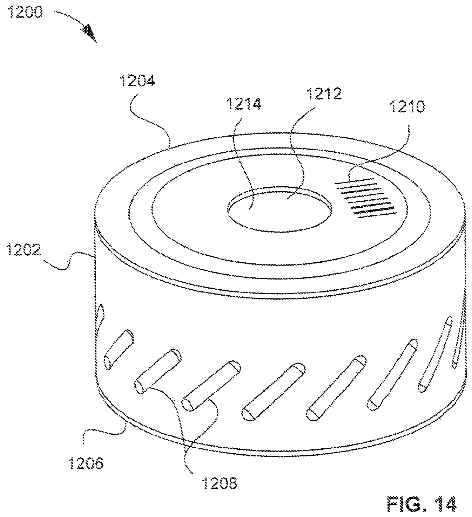

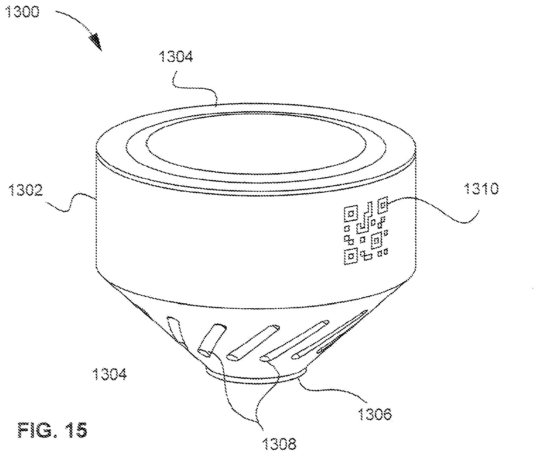

Referring to FIGS. 13A-15B, alternate containers are disclosed that can be configured such that some or all of the steps of Roasting 212, 214, Grinding 206, 207, and Brewing 214, 215 can be performed within the pod or package containing, for example, a single-serving size of coffee. Figures 13A and 13B illustrate one version of a container 1100 that can be configured for roasting, grinding, and brewing within the container 1100. The container 1100 can include a cylindrical body 1102 that can be made from metal, aluminum, or any other suitable material and can define a cavity (not shown) that can be configured to retain a plurality of green coffee beans. The container 1100 can include a seal 1104, filter 1106, and a plurality of indents 1108 that can be substantially sealed prior to use of the container 1100. Referring to Figure 13B, the plurality of indents 1108 can be sealed, for example, by a plurality of flaps 1158. The container 1100 can include a validation marking 1110 that can be read by an integrated beverage system 12 or 800, for example. Figure 14 illustrates an alternate embodiment of a container 1200, where the container 1200 can have a substantially toroid or donut-shaped body 1202. The container 1200 can include a seal 1204, filter 1206, validation marking 1210, and a plurality of indents 1208. A cylindrical wall 1214 of the body 1202 can define an inner cylinder 1212, where the cylindrical wall of the body 1202 can be substantially transparent. In an example embodiment, the body 1202 can be placed over an optical heating element (not shown) such that light can penetrate the body 1202 through the cylindrical wall 1214 and can roast coffee beans. In an example embodiment, room temperature air can be flowed through the inner cylinder 1212 in the center of the container 1200 to keep the temperature of the transparent cylindrical wall 1214 within acceptable ranges and allow the use of low cost transparent plastics or other materials. It will be appreciated that any suitable container configuration is contemplated that can be used with any suitable roasting system or method. Figures 15A and 15B illustrate an alternate embodiment of a container 1300 that can include a body 1302, seal 1304, filter 1306, validation marking 1310, and a plurality of indents 1308 that can be positioned on the filter 1306 or bottom surface of the body 1302. Referring to Figure 15B, providing forced heated air through the plurality of indents 1308 can cause beans within the container 1300 to travel vertically and radially outward towards the perimeter of the body 1302, where the beans can then drop back down towards the filter 1306 such that the beans are substantially mixed within the container 1300 to provide substantially even roasting.

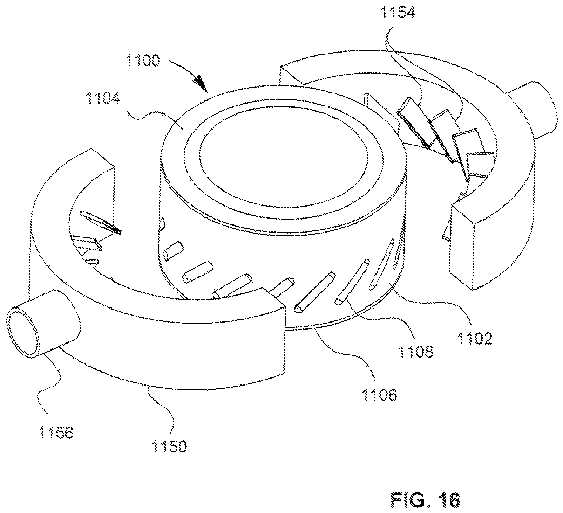

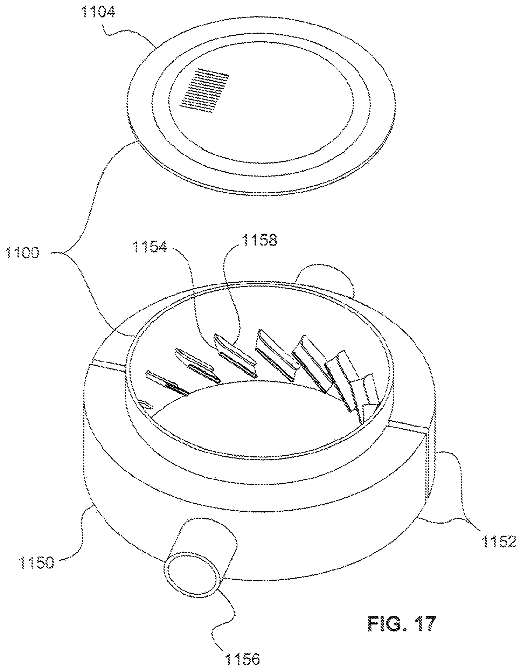

Figures 16-19 illustrate an example embodiment of a method for using the container 1100 illustrated in Figures 13A and 13B. Referring to FIG. 16, the container 1100 is shown prior to engagement with a roasting assembly 1150 according to one embodiment. The roasting assembly 1150 can include a pair of hemispherical members 1152 that can be actuated to engage the circumference of the body 1102 of the container 1100. The hemispherical members 1152 can include a plurality of hollow teeth 1154 that can be configured to penetrate the plurality of indents 1108 on the body 1102 as shown in Figure 17. The plurality of hollow teeth 1154 can be coupled with a heat source 1156 that can communicate hot air through the hemispherical members 1152, through the plurality of hollow teeth 1154, and into the cavity defined by the body 1102 such that the beans are roasted. Upon completion of the roasting process, which can be determined by a control system or by the user, the roasting assembly 1150 can be disengaged from the container 1100. When the roasting assembly 1150 is disengaged, a plurality of flaps 1158, which can be pushed inwardly by the plurality of hollow teeth 1154, can return to a resting position and substantially seal the cavity defined by the body 1102.

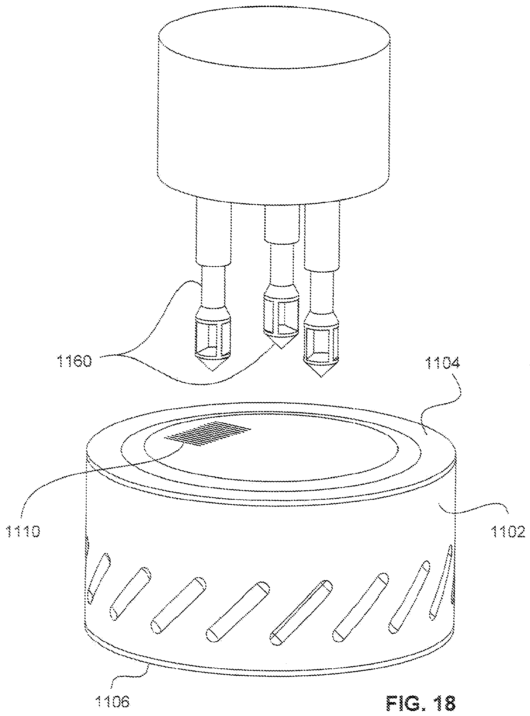

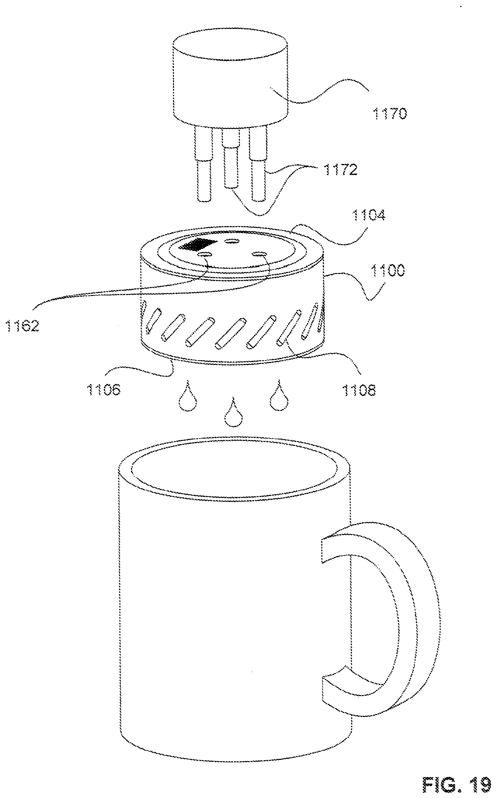

Referring to Figure 18, a grinding assembly 1160 can be engaged with the container 1100 to grind the beans within the container 1100. The grinding assembly can include a plurality of grinders, such as ultrasonic grinders, that can penetrate the seal 1104 and form one or a plurality of apertures 1162 (FIG. 19). The grinding process can include any suitable tools and any suitable type or direction of penetration. The grinding process can include packaging inert grinding media in the container 1100. The grinding process can use the plurality of indents of the container 1100 to form a portion of a mechanical grinding mechanism. The grinding process can be controlled manually or by any suitable control system. An alternative to physical grinding can be to impinge high pressure water on the beans that can cause the beans to fracture into small pieces. In alternate embodiments, the coffee beans can have small mechanical or laser drilled holes formed in them to ease the fracture process. Hot water or steam can be injected into such holes, which can be used to extract coffee from the beans, which can be referred to as "in-bean brewing". In an alternate embodiment, the coffee bean can be laser ablated such that the ablation products can be captured and mixed with water to form the drink. In this case, the bean may be a green bean or a roasted bean. The local atmosphere surrounding the beans can be controlled by introducing certain gases or gas mixtures to aid in the laser ablation process. Laser ablation can be performed by pulsed, high peak power lasers such as CO2 lasers, excimer lasers, pulsed diode lasers, and other such lasers. It will be appreciated that coffee beans or coffee grounds can be broken apart, reduced in diameter, ground, mashed, pulverized, cut, chopped, reduced, burst, drilled, cored, fired, or otherwise modified by the integrated beverage system. In an alternate embodiment, the one or a plurality of apertures 1162 can be formed by the integrated beverage system during the roasting stage (for example, as shown in FIG. 13B) such that heated air is able to escape the container 1100.

Referring to Figure 19, a brewing assembly 1170 can be engaged with the container 1100 to brew coffee within the container 1100. The brewing assembly can contain a plurality of hot water delivery tubes 1172, for example that can deliver hot water through the one or a plurality of apertures 1162 created by the grinding assembly 1160 or roasting assembly. The hot water can engage the coffee grounds, where brewed coffee can then be forced through or can drip through the filter 1106 positioned on the bottom surface of the container 1100.

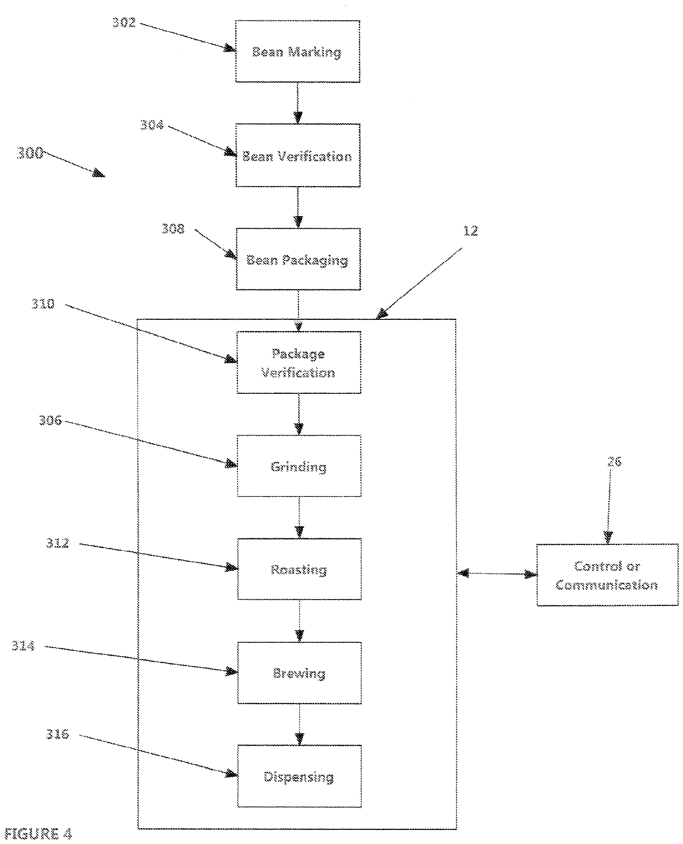

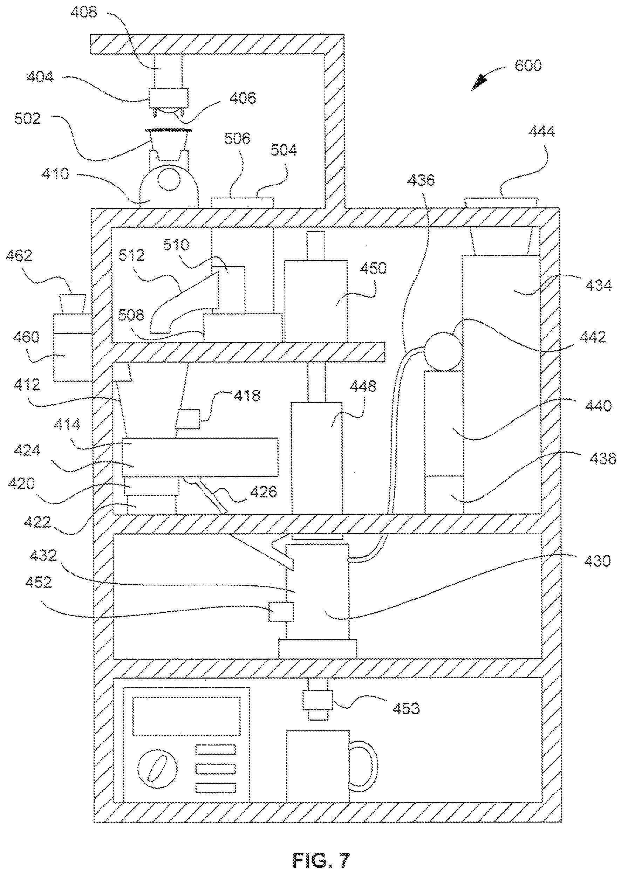

Referring to Figure 4, an alternate Method 300 is depicted for providing coffee to a consumer. Method 300 can be performed at least partially by the interactive beverage system 10, the integrated beverage system 12, or the integrated beverage system 600 (FIG. 7). It will be appreciated that any suitable steps of the method 300 can be performed by the integrated beverage system 600 or can be performed independently from the integrated beverage system 600.

Method 300 can include the steps of Bean Marking 302 and Bean Verification 304, which can be analogous to the steps of Bean Marking 102 and Bean Verification 104, respectively, as described with reference to FIG. 2. Method 300 can include the step of Bean Packaging 308, which can incorporate the disclosure described with reference to Bean Packaging 208, Single Bean Arrangement 218, or Multi-Bean Arrangement 219 shown in FIG. 3.

Method 300 can include the step of Package Verification, which can incorporate the disclosure of Package Verification 110 shown in FIG. 2. Method 300 can include the step of Grinding 306, which can incorporate the disclosure described with reference to Grinding 206, 207 shown in FIG. 3. As illustrated, unroasted coffee beans can be packaged, such as in single-serving containers 502, where the single-serving package can be inserted into the integrated beverage system 600. The integrated beverage system 600 can then validate the container 502 and remove the coffee beans from the package or pod. After removal, the unroasted coffee beans can go through the Grinding 306 step prior to being roasted. Method 300 can include the step of Roasting 312, which can incorporate the disclosure associated with Roasting 212 shown in FIG. 3. Method 300 can then transition to the steps of Brewing 314 and Dispensing 316, which can correspond to the steps of Brewing114 and Dispensing 116 shown in FIG. 2. In the illustrated version, the integrated beverage system 12 can verify bean packaging, roast coffee beans, grind coffee beans, and then brew coffee all within the same machine.

In some cases it may be beneficial for a consumer to keep track of their coffee intake. This can be accomplished with the help of a smartphone app or website with personalized information based on the coffee consumption history of that individual. The app can keep track of coffee intake by interfacing with the integrated beverage system 12 of Figure 1, for example. It is known that the caffeine level in the body is boosted immediately after consuming coffee and decreases in an approximately exponential decay fashion over the course of 10-20 hours. It is also known that caffeine increases mental alertness and acuity. The app can keep track of coffee intake and suggest types of coffee, roast level, etc., to the user to maintain a desired level of mental alertness or acuity (i.e., maintain a certain caffeine level in the body). The app can make these suggestions based on the time, type, quantity of previous coffee drinks, a reference caffeine metabolism curve, and learning about the user's personal caffeine metabolism rate. This personal metabolism rate can be determined by user response to questions or user response to tests of mental acuity. The app can also place an order or control the integrated beverage system 12 of Figure 1 at the appropriate time. The app can also take into account the long term acclimatization to caffeine that can occur with drinking coffee over days, weeks, or months that can require the user to drink more coffee to reach the same level of mental acuity.

In general, it will be apparent to one of ordinary skill in the art that at least some of the embodiments described herein can be implemented in many different embodiments of software, firmware, and/or hardware. The software and firmware code can be executed by a processor or any other similar computing device. The software code or specialized control hardware that can be used to implement embodiments is not limiting. For example, embodiments described herein can be implemented in computer software using any suitable computer software language type, using, for example, conventional or object-oriented techniques. Such software can be stored on any type of suitable computer-readable medium or media, such as, for example, a magnetic or optical storage medium or flash memory. The operation and behavior of the embodiments can be described without specific reference to specific software code or specialized hardware components. The absence of such specific references is feasible, because it is clearly understood that artisans of ordinary skill would be able to design software and control hardware to implement the embodiments based on the present description with no more than reasonable effort and without undue experimentation.

Moreover, the processes described herein can be executed by programmable equipment, such as computers or computer systems and/or processors. Software that can cause programmable equipment to execute processes can be stored in any storage device, such as, for example, a computer system (nonvolatile) memory, an optical disk, magnetic tape, or magnetic disk. Furthermore, at least some of the processes can be programmed when the computer system is manufactured or stored on various types of computer-readable media.

It can also be appreciated that certain portions of the processes described herein can be performed using instructions stored on a computer-readable medium or media that direct a computer system to perform the process steps. A computer-readable medium can include, for example, memory devices such as diskettes, compact discs (CDs), digital versatile discs (DVDs), optical disk drives, or hard disk drives. A computer-readable medium can also include memory storage that is physical, virtual, permanent, temporary, semi-permanent, and/or semi-temporary.

A "computer," "computer system," "host," "server," or "processor" can be, for example and without limitation, a processor, microcomputer, minicomputer, server, mainframe, laptop, personal data assistant (PDA), wireless e-mail device, cellular phone, pager, processor, fax machine, scanner, or any other programmable device configured to transmit and/or receive data over a network. Computer systems and computer-based devices disclosed herein can include memory for storing certain software modules used in obtaining, processing, and communicating information. It can be appreciated that such memory can be internal or external with respect to operation of the disclosed embodiments. The memory can also include any means for storing software, including a hard disk, an optical disk, floppy disk, ROM (read only memory), RAM (random access memory), PROM (programmable ROM), EEPROM (electrically erasable PROM) and/or other computer-readable media. Non-transitory computer-readable media, as used herein, comprises all computer-readable media except for a transitory, propagating signal.

In various embodiments disclosed herein, a single component can be replaced by multiple components and multiple components can be replaced by a single component to perform a given function or functions. Except where such substitution would not be operative, such substitution is within the intended scope of the embodiments.

Some of the figures can include a flow diagram. Although such figures can include a particular logic flow, it can be appreciated that the logic flow merely provides an exemplary implementation of the general functionality. Further, the logic flow does not necessarily have to be executed in the order presented unless otherwise indicated. In addition, the logic flow can be implemented by a hardware element, a software element executed by a computer, a firmware element embedded in hardware, or any combination thereof.

The foregoing description of embodiments and examples has been presented for purposes of illustration and description. It is not intended to be exhaustive or limiting to the forms described. Numerous modifications are possible in light of the above teachings. Some of those modifications have been discussed, and others will be understood by those skilled in the art. The embodiments were chosen and described in order to best illustrate principles of various embodiments as are suited to particular uses contemplated. The scope is, of course, not limited to the examples set forth herein, but can be employed in any number of applications and equivalent devices by those of ordinary skill in the art. Rather it is hereby intended the scope of the invention to be defined by the claims appended hereto.

The following clauses define particular aspects and embodiments of the invention:
Clause 1. A method for brewing coffee comprising the steps of:
   providing an integrated beverage system having a roasting system and a brewing system;
   providing a container containing a plurality of coffee grounds, wherein the plurality of coffee grounds are unroasted;
   inserting the container into the integrated beverage system;
   engaging the plurality of coffee grounds with the roasting system of the integrated beverage system;
   roasting the plurality of coffee grounds;
   engaging the plurality of coffee grounds with the brewing system of the integrated beverage system; and
   brewing the plurality of coffee grounds with the integrated beverage system.
Clause 2. The method of clause 1, further comprising the step of opening the container with the integrated beverage system.
Clause 3. The method of clause 1, wherein the steps of engaging the plurality of coffee grounds with the roasting system and engaging the plurality of coffee grounds with the brewing system comprise transferring the plurality of coffee grounds to the roasting system and transferring the plurality of coffee grounds to the brewing system.
Clause 4. The method of clause 1, wherein the steps of engaging the plurality of coffee grounds with the roasting system and engaging the plurality of coffee grounds with the brewing system comprise engaging the container with the roasting system and engaging the container with the brewing system, wherein the container contains the plurality of coffee grounds.
Clause 5. The method of clause 1, wherein the steps of engaging the plurality of coffee grounds with the roasting system and engaging the plurality of coffee grounds with the brewing system comprise moving the roasting system into engagement with the plurality of coffee grounds and moving the brewing system into engagement with the coffee grounds, wherein the container remains substantially stationary.
Clause 6. A method for brewing coffee comprising the steps of:
   providing an integrated beverage system having a roasting system, a grinding system, and a brewing system;
   providing a container containing a plurality of coffee beans, wherein the plurality of coffee beans are unroasted;
   inserting the container into the integrated beverage system;
   engaging the plurality of coffee beans with the roasting system of the integrated beverage system;
   roasting the plurality of coffee beans;
   Engaging the plurality of coffee beans with the grinding system of the integrated beverage system;
   grinding the plurality of coffee beans such that a plurality of coffee grounds are formed;
   engaging the plurality of coffee grounds with the brewing system; and
   brewing the plurality of coffee grounds with the integrated beverage system.
Clause 7. The method of clause 6, further comprising the step of opening the container with the integrated beverage system.
Clause 8. The method of clause 6, wherein the steps of engaging the plurality of coffee beans with the roasting system and engaging the plurality of coffee beans with the grinding system comprise transferring the plurality of coffee beans to the roasting system and transferring the plurality of coffee beans to the grinding system.
Clause 9. The method of clause 6, wherein the steps of engaging the plurality of coffee beans with the roasting system and engaging the plurality of coffee beans with the grinding system comprise engaging the container with the roasting system and engaging the container with the grinding system, wherein the container contains the plurality of coffee beans.
Clause 10. The method of clause 6, wherein the steps of engaging the plurality of coffee beans with the roasting system and engaging the plurality of coffee beans with the grinding system comprise moving the roasting system into engagement with the plurality of coffee beans and moving the grinding system into engagement with the plurality of coffee beans, wherein the container remains substantially stationary.
Clause 11. The method of clause 6, wherein the step of engaging the plurality of coffee grounds with the brewing system comprises transferring the plurality of coffee grounds to the brewing system.
Clause 12.The method of clause 6, wherein the step of engaging the plurality of coffee grounds with the brewing system comprises engaging the container with the brewing system, wherein the container contains the plurality of coffee grounds.
Clause 13. The method of clause 6, wherein the step of engaging the plurality of coffee grounds with the brewing system comprises moving the brewing system into engagement with the plurality of coffee grounds, wherein the container remains substantially stationary.
Clause 14. A method for brewing coffee comprising the steps of:
   providing an integrated beverage system having a grinding system, a roasting system, and a brewing system;
   providing a container containing a plurality of coffee beans, wherein the plurality of coffee beans are unroasted;
   inserting the container into the integrated beverage system;
   engaging the plurality of coffee beans with the grinding system of the integrated beverage system;
   grinding the plurality of coffee beans such that a plurality of coffee grounds are formed;
   engaging the plurality of coffee grounds with the roasting system of the integrated beverage system;
   roasting the plurality of coffee grounds;
   engaging the plurality of coffee grounds with the brewing system; and
   brewing the plurality of coffee grounds with the integrated beverage system.
Clause 15. The method of clause 14, further comprising the step of opening the container with the integrated beverage system.
Clause 16. The method of clause 14, wherein the step of engaging the plurality of coffee beans with the grinding system comprises transferring the plurality of coffee beans to the grinding system.
Clause 17. The method of clause 14, wherein the step of engaging the plurality of coffee beans with the grinding system comprises engaging the container with the grinding system, wherein the container contains the plurality of coffee beans.
Clause 18. The method of clause 14, wherein the step of engaging the plurality of coffee beans with the grinding system comprises moving the grinding system into engagement with the plurality of coffee beans, wherein the container remains substantially stationary.
Clause 19. The method of clause 14, wherein the steps of engaging the plurality of coffee grounds with the roasting system and engaging the plurality of coffee grounds with the brewing system comprise transferring the plurality of coffee grounds to the roasting system and transferring the plurality of coffee grounds to the brewing system.
Clause 20. The method of clause 14, wherein the steps of engaging the plurality of coffee grounds with the roasting system and engaging the plurality of coffee grounds with the brewing system comprise engaging the container with the roasting system and engaging the container with the brewing system, wherein the container contains the plurality of coffee grounds.
Clause 21. The method of clause 14, wherein the steps of engaging the plurality of coffee grounds with the roasting system and engaging the plurality of coffee grounds with the brewing system comprise moving the roasting system into engagement with the plurality of coffee grounds and moving the brewing system into engagement with the coffee grounds, wherein the container remains substantially stationary.

## Claims

1. A method for brewing coffee comprising the steps of: providing an integrated beverage system having a roasting system, a grinding system, and a brewing system; providing a plurality of coffee beans, wherein the plurality of coffee beans are unroasted; engaging the plurality of coffee beans with the roasting system of the integrated beverage system; roasting the plurality of coffee beans; engaging the plurality of coffee beans with the grinding system of the integrated beverage system; grinding the plurality of coffee beans such that a plurality of coffee grounds are formed; engaging the plurality of coffee grounds with the brewing system; and brewing the plurality of coffee grounds with the integrated beverage system.

2. The method of claim 1, wherein the overall time for roasting is in the range of from 1 to 300 seconds.

3. The method of claim 1 or claim 2, wherein the roasting is performed at a temperature in the range of from 200 to 500 Celsius.

4. The method of any preceding claim, wherein roasting utilises a heater temperature increase ramp rate of 1 to 200 C/sec.

5. The method of any preceding claim, wherein the roasting system is a hybrid convective and radiation based roasting system.

6. The method of any preceding claim, wherein the system is configured to produce a cup of coffee from the unroasted whole beans in less than five minutes.

7. The method of any preceding claim comprising entering at a control interface each of at least one of a plurality of user selected roasting parameters, at least one of a plurality of user selected grinding parameters and at least one of a plurality of user selected brewing parameters.

8. The method of any preceding claim, wherein the beans are provided in a container and the method comprises inserting the container into the integrated beverage system.

9. The method of claim 8, wherein the steps of engaging the plurality of coffee beans with the roasting system and engaging the plurality of coffee beans with the grinding system comprise: engaging the container with the roasting system and engaging the container with the grinding system, wherein the container contains the plurality of coffee beans; or alternatively moving the roasting system into engagement with the plurality of coffee beans and moving the grinding system into engagement with the plurality of coffee beans, wherein the container remains substantially stationary.

10. The method of claim 8 or claim 9, wherein the step of engaging the plurality of coffee grounds with the brewing system comprises: engaging the container with the brewing system, wherein the container contains the plurality of coffee grounds; or alternatively moving the brewing system into engagement with the plurality of coffee grounds, wherein the container remains substantially stationary.

11. The method of any one of claims 8 to 10, comprising the step of opening the container with the integrated beverage system.

12. The method of any one of claims 8 to 11, comprising package verification of the container by the integrated beverage system to verify the authenticity of the container.

13. The method of any preceding claim wherein the system is configured to accept unroasted coffee beans in discrete single-use packages.

14. The method of claim 13, wherein the single-use packages are biodegradable.

15. The method of any preceding claim, wherein the integrated beverage system is coupled with or communicates via the cloud with a database server or an ecommerce server.
